# EUROPEAN PATENT APPLICATION

(11) **EP 4 579 846 A1**
(43) Date of publication of application: **02.07.2025**
(21) Application number: 23857770.4
(22) Date of filing: 24.08.2023
(51) Int. Cl.: H01M 10/0565, H01M 10/056, H01M 10/058, H01M 4/134, H01M 4/1395, H01M 10/052, H01M 4/02

(54) **LITHIUM METAL BATTERY AND METHOD FOR MANUFACTURING LITHIUM METAL BATTERY**

(30) Priority: 26.08.2022 KR 20220107927
(71) Applicant: SAMSUNG SDI CO., LTD., Yongin-si, Gyeonggi-do 17084 (KR); IUCF-HYU (Industry-University Cooperation Foundation Hanyang University), Seoul 04763 (KR)
(72) Inventor: BAE, Woo Jin, Yongin-Si Gyeonggi-do 17084 (KR); WOO, Hyun Sik, Yongin-Si Gyeonggi-do 17084 (KR); LEE, Kang Hee, Yongin-Si Gyeonggi-do 17084 (KR); MOON, Jong Seok, Yongin-Si Gyeonggi-do 17084 (KR); KIM, Hee Min, Yongin-Si Gyeonggi-do 17084 (KR); PARK, Jong Seok, Yongin-Si Gyeonggi-do 17084 (KR); PARK, Jin Hwan, Yongin-Si Gyeonggi-do 17084 (KR); KIM, Dong Won, Seoul 06219 (KR); BAN, A Hyeon, Seoul 05112 (KR); PYO, Su Jin, Seoul 02157 (KR); ROH, Jin Ah, Seoul 03951 (KR)
(74) Representative: Michalski Hüttermann & Partner Patentanwälte mbB
(86) International application number: PCT/KR2023/012611
(87) International publication number: WO 2024/043738

(57) **Abstract**

Disclosed are a lithium metal battery and a manufacturing method therefor, the lithium metal battery including a cathode, an anode, and an electrolyte disposed between the cathode and the anode, wherein the anode includes a lithium metal, the electrolyte includes a catholyte disposed adjacent to the cathode and an anolyte disposed between the catholyte and the anode, the catholyte includes a first polymer electrolyte, the first polymer electrolyte includes a first polymer, and the first polymer includes a first repeating unit derived from a first single-ion conducting monomer and a second repeating unit derived from a first crosslinking monomer having a plurality of reactive functional groups.

## Description

### Technical Field

The present disclosure relates to an anode for lithium metal batteries, a lithium metal battery including the same, and a method for manufacturing the anode for lithium metal batteries.

### Background Art

In currently commercially available lithium batteries, carbon-based anode active materials such as graphite are mainly used. Carbon-based anode active materials have no volume change during charging and discharging, so lithium batteries have high stability. Graphite has a theoretical electrical capacitance of 372 mAh/g.

Lithium metal may be used as an anode active material. Lithium metal has a theoretical electrical capacitance of 3860 mAh/g. Lithium metal causes a short circuit with a cathode due to a side reaction with an electrolyte during charging and discharging, thereby deteriorating the lifespan characteristics of a lithium metal battery.

### Disclosure of Invention

### Technical Problem

A lithium metal battery includes a high-voltage cathode and a lithium metal anode. Since the high-voltage cathode operates at a high voltage of 3.5 V or more or 4.0 V or more, an organic solvent included in an electrolyte is oxidized at the high voltage, thereby causing a side reaction between the electrolyte and the cathode, resulting in deterioration of the lithium metal battery. When charging and discharging the lithium metal anode, a lithium-containing metal layer is plated or dissolved between the electrolyte and the lithium metal anode. As the charging and discharging of the lithium metal battery is repeated, the lithium-containing metal layer includes impurities remaining in the electrodes due to side reactions with the electrolyte, decomposition products of the electrolyte, and the like. The surface of the lithium-containing metal layer including these impurities becomes rough and hard. Lithium dendrites are plated on the lithium-containing metal layer having a rough and hard surface. The lithium dendrites grow continuously during the charge and discharge process, thereby causing a short circuit between the anode and the cathode. As a result, the lithium metal battery deteriorates. Therefore, it is required to prevent side reactions at the high-voltage cathode of the lithium metal battery and to suppress the growth of lithium dendrites at the anode.

An aspect is to provide a lithium metal battery including an electrolyte of a novel structure that prevents side reactions at a high-voltage cathode of the lithium metal battery and suppresses the growth of lithium dendrites at an anode.

Another aspect is to provide a method for manufacturing a lithium metal battery.

### Solution to Problem

According to an embodiment, there is provided a lithium metal battery including
a cathode, an anode, and an electrolyte disposed between the cathode and the anode,
wherein the anode includes a lithium metal,
the electrolyte includes a catholyte disposed adjacent to the cathode and an anolyte disposed between the catholyte and the anode,
the catholyte includes a first polymer electrolyte, and the first polymer electrolyte includes a first polymer, and
the first polymer includes a first repeating unit derived from a first single ion conducting monomer and a second repeating unit derived from a first crosslinking monomer having a plurality of reactive functional groups.

According to another embodiment, there is provided a method for manufacturing a lithium metal battery, the method including
preparing a composition for forming a catholyte,
preparing a composition for forming an anolyte,
applying the composition for forming an anolyte onto a lithium metal anode,
crosslinking the applied composition for forming an anolyte to prepare the lithium metal anode coated with an anolyte,
stacking the lithium metal anode coated with the anolyte, porous film and a cathode to prepare an assembly,
injecting the composition for forming a catholyte into the assembly, and
crosslinking the injected composition for forming a catholyte to prepare a lithium metal battery including a catholyte,
wherein the lithium metal battery includes a cathode, an anode, and an electrolyte disposed between the cathode and the anode,
the catholyte includes a first polymer electrolyte, and the first polymer electrolyte includes a first polymer, and
the first polymer includes a first repeating unit derived from a first single ion conducting monomer and a second repeating unit derived from a first crosslinking monomer having a plurality of reactive functional groups.

### Advantageous Effects of Invention

According to an aspect, it is possible to provide a lithium metal battery having an electrolyte having a novel structure, in which deterioration of a catholyte is prevented, side reactions of a lithium metal anode are prevented, and cycle characteristics are improved.

### Brief Description of Drawings

FIG. 1 is a cross-sectional schematic view of a lithium metal battery according to an example embodiment.
FIG. 2A is a scanning electron microscope image of the surface of an anolyte prepared in Preparation Example 2.
FIG. 2B is a scanning electron microscope image of the surface of a lithium metal anode prepared in Comparative Preparation Example 3.
FIG. 3 is a graph showing the electrochemical stability of catholytes prepared in Preparation Example 1 and Comparative Preparation Example 1.
FIG. 4 is a scanning electron microscope image of a cross-section of an anode of a lithium metal battery manufactured in Evaluation Example 4 after charging.
FIG. 5 is a graph showing the results of measuring the lifespan characteristics of lithium metal anodes manufactured in Example 1 and Comparative Examples 1 and 2.
FIG. 6 is a schematic view of a lithium metal battery according to an example embodiment.
FIG. 7 is a schematic view of a lithium metal battery according to an example embodiment.
FIG. 8 is a schematic view of a lithium metal battery according to an example embodiment.

### Best Mode for Carrying out the Invention

The present inventive concept to be described below may be subjected to various transformations and may have various embodiments, and specific embodiments are illustrated in the drawings and described in detail. However, this is not intended to limit the present inventive concept to specific embodiments, and should be understood to include all transformations, equivalents, or substitutes included in the technical scope of this present inventive concept.

The terms used below are only used to describe specific embodiments and are not intended to limit the present inventive concept. Singular expressions include plural expressions unless context clearly dictates otherwise. Hereinafter, terms such as "comprise" or "have" are intended to indicate the presence of features, numbers, steps, operations, components, parts, ingredients, materials, or combinations thereof described in the specification, but It should be understood that these terms do not exclude in advance the presence or addition of one or more other features, numbers, steps, operations, components, parts, components, materials, or combinations thereof. "/" used below may be interpreted as "and" or "or" depending on the situation.

In order to clearly express various layers and areas in the drawings, thicknesses are enlarged or reduced. Throughout the specification, similar parts are given the same reference numerals. Throughout the specification, when a part such as a layer, membrane, region, plate, etc. is said to be "on" or "on" another part, this includes not only the case where it is directly on top of the other part, but also the case where another part is therebetween. Throughout the specification, terms such as first, second, and the like may be used to describe various components, but the components should not be limited by the terms. Terms are used only to distinguish one component from another. In the present specification and drawings, components having substantially the same functional configuration are given the same reference numerals. and redundant description is omitted.

In the present disclosure, the "particle diameter" of a particle refers to an average diameter when the particle is spherical, and refers to an average major axis length when the particle is non-spherical. The particle diameter of a particle may be measured using a particle size analyzer (PSA). The "particle diameter" of a particle is, for example, an average particle diameter. The "average particle diameter" is, for example, a median particle diameter (D50). The median particle diameter (D50) is, for example, a size of the particle corresponding to 50% of the cumulative volume, calculated from the side of the particle with the smaller particle size in the size distribution of the particles measured by laser diffraction.

In the present disclosure, the "metal" includes both metals and metalloids such as silicon and germanium, under an elemental state or an ionic state.

In the present disclosure, the "alloy" refers to a mixture of two or more metals.

In the present disclosure, the "cathode active material" refers to a cathode material capable of undergoing lithiation and delithiation.

In the present disclosure, the "anode active material" refers to an anode material capable of undergoing lithiation and delithiation.

In the present disclosure, the "lithiation" and "lithiating" refers to a process of adding lithium to a cathode active material or an anode active material.

In the present disclosure, the "delithiation" and "delithiate" refers to a process of removing lithium from a cathode active material or an anode active material.

In the present disclosure, the "charge" and "charging" refer to a process of providing electrochemical energy to a battery.

In the present disclosure, the "discharge" and "discharging" refer to a process of removing electrochemical energy to a battery.

In the present disclosure, the "positive electrode" and "cathode" refer to an electrode at which electrochemical reduction and lithiation occur during a discharge process.

In the present disclosure, the "negative electrode" and "anode" refer to an electrode at which electrochemical oxidation and delithiation occur during a discharge process.

Hereinafter, a lithium metal battery and a method for manufacturing a lithium metal battery according to example embodiments will be described in more detail.

### [Lithium metal battery]

A lithium metal battery according to an embodiment includes: a cathode; an anode; and an electrolyte disposed between the cathode and the anode, wherein the anode includes a lithium metal, the electrolyte includes a catholyte disposed adjacent to the cathode and an anolyte disposed between the catholyte and the anode, the catholyte includes a first polymer electrolyte, the first polymer electrolyte includes a first polymer, and the first polymer includes a first repeating unit derived from a first single-ion conducting monomer and a second repeating unit derived from a first cross-linking monomer having a plurality of reactive functional groups. An electrolyte includes a catholyte adjacent to a cathode and an anolyte adjacent to an anode, thereby preventing the deterioration of an electrolyte in a high-voltage cathode and suppressing the growth of lithium dendrites on the surface of an anode. As a result, the deterioration of a lithium metal battery is prevented, and the cycle characteristics of the lithium metal battery are improved.

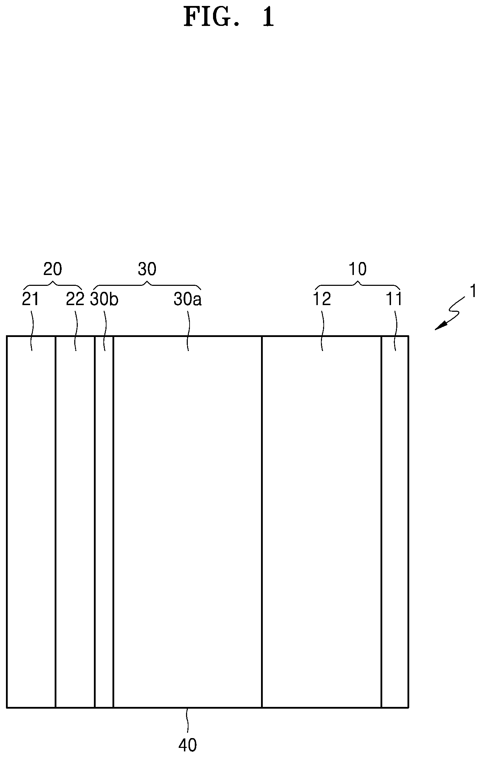

FIG. 1 is a cross-sectional schematic view of a lithium metal battery according to an embodiment.

Referring to FIG. 1, a lithium metal battery 1 includes: a cathode 10; an anode 20; and an electrolyte 30 disposed between the cathode 10 and the anode 20, wherein the anode 20 includes a lithium metal, the electrolyte 30 includes a catholyte 30a disposed adjacent to the cathode 10 and an anolyte 30b disposed between the catholyte 30a and the anode 20, the catholyte 30a includes a first polymer electrolyte, the first polymer electrolyte includes a first polymer, and the first polymer includes a first repeating unit derived from a first single-ion conducting monomer and a second repeating unit derived from a first crosslinking monomer having a plurality of reactive functional groups.

### [Electrolyte]

Referring to FIG. 1, a lithium metal battery 1 includes: a cathode 10; an anode 20; and an electrolyte 30 disposed between the cathode 10 and the anode 20. The electrolyte 30 includes a catholyte 30a disposed adjacent to the cathode 10 and an anolyte 30b disposed between the catholyte 30a and the anode 20,

### [Electrolyte: catholyte]

The catholyte 30a includes a first polymer electrolyte, and the first polymer electrolyte includes a first polymer. The first polymer includes a first repeating unit derived from a first single-ion conducting monomer and a second repeating unit derived from a first crosslinking monomer having a plurality of reactive functional groups. The first polymer includes a first repeating unit, thereby providing high ion conductivity and increased lithium ion conductivity. As a result, the internal resistance of the lithium metal battery including the catholyte 30a is reduced. Since the first polymer includes the second repeating unit, the catholyte has a strong crosslinked structure, thereby effectively accommodating the volume change of the lithium metal battery during charging and discharging and effectively preventing the poor contact between the cathode active material and the catholyte.

The first polymer includes a first repeating unit derived from a first single-ion conducting monomer.

The first single ion-conducting monomer may include, for example, a reactive functional group, an anionic functional group, and a counter cation within the monomer molecule. Since the anionic functional group of the first single-ion conducting monomer is fixed in the first polymer within the catholyte 30a, the counter cation can be transmitted and/or spread more effectively in the catholyte 30a.

The first single-ion conducting monomer includes a reactive functional group, and the reactive functional group is a functional group that forms a first repeating unit of the first polymer through a crosslinking reaction with a crosslinking agent and/or another monomer. The crosslinking reaction is a thermal crosslinking reaction, an ultraviolet crosslinking reaction, or the like, but is not limited thereto, and any crosslinking reaction used in the related technical field may be used. The reactive functional group is, for example, a functional group that includes a double bond. The reactive functional group includes, but is not necessarily limited to, a vinyl group, an acrylic group, a methacrylic group, a (4-vinyl)phenyl group, or a combination thereof, and any group used as a reactive functional group in the related technical field may be used.

The first single-ion conducting monomer includes an anionic functional group, and the anionic functional group is a functional group capable of forming an anion within the catholyte 30a. The anionic functional group includes, but is not necessarily limited to, a carboxyl group, a sulfonate group, a sulfonylimide group, or a combination thereof, and any anionic functional group used in the related technical field may be used.

The first single-ion conducting monomer includes a counter cation, and the counter cation is, for example, an alkali metal cation. The alkali metal cation is, for example, a lithium cation, a sodium cation, a potassium cation, a rubidium cation, a cesium cation, or a combination thereof.

In a single ion-conducting monomer, an anionic functional group is fixed within the monomer molecule, and a counter cation is not fixed within the monomer molecule. Therefore, the conduction efficiency of a counter ion can be improved in the first polymer including the first repeating unit derived from the single-ion conducting monomer including the counter cation. For example, the first polymer includes a polymer network including a plurality of anionic functional groups fixed thereto and a plurality of counter ions dispersed within the polymer network, wherein the counter ions can be relatively freely moved and/or transferred within the polymer network.

The content of the alkali metal cation included in the first polymer is, for example, 0.1 to 1 mol, 0.5 to 1 mol, 0.8 to 1 mol, or 0.9 to 1 mol per 1 mol of the first repeating unit.

The first polymer includes a second repeating unit derived from a first crosslinking monomer having a plurality of reactive functional groups.

The first crosslinking monomer may include, for example, two or more, three or more, or four or more reactive functional groups. As the number of reactive functional groups included in the first crosslinking monomer increases, the first crosslinking monomer can form a more rigid crosslinked product with the first single ion-conducting monomer. As a result, the durability of the catholyte 30a including the first polymer can be improved because the first polymer including the first repeating unit and the second repeating unit has a more rigid structure. The number of reactive functional groups included in one first crosslinking monomer may be, for example, 2 to 10, 3 to 8, or 4 to 6.

The first crosslinking monomer may be a monomer including an ester group. Since the first crosslinking monomer includes an ester group, the oxidation resistance of the catholyte can be further improved. Therefore, a side reaction between the anolyte and the anode and/or a side reaction between the anolyte and the solvent can be more effectively suppressed by the oxidation of the anolyte within a high-voltage anode. As a result, deterioration of the catholyte can be prevented.

The first crosslinking monomer may include, for example, an acrylic monomer including a plurality of acrylic groups, a methacrylic monomer including a plurality of methacrylic groups, or a combination thereof. The first crosslinking monomer may include, for example, polycaprolactone diacrylate, polycaprolactone dimethacrylate, pentaerythritol tetraacrylate, pentaerythritol tetramethacrylate, trimethylolpropane triacrylate, trimethylolpropane trimethacrylate, or a combination thereof.

The first crosslinking monomer may not be, for example, a glycol monomer. The first crosslinking monomer may be, for example, a monomer free of an alkylene oxide repeating unit. A glycol monomer including an alkylene oxide repeating unit has poor oxidation resistance. Therefore, a polymer including a repeating unit derived from a glycol monomer can easily be oxidized at high voltage, thereby deteriorating the catholyte. The alkylene oxide repeating unit is, for example, an ethylene oxide repeating unit.

The molar ratio of the first repeating unit and the second repeating unit included in the first polymer may be, for example, 99:1 to 1:99, 90:10 to 50:50, 90:10 to 66:33, 90:10 to 75:25 or 99:1 to 80:20.

The molecular weight of the first polymer may be, for example, 1000 Daltons or more, 10,000 Daltons or more, or 100,000 Daltons or more. The molecular weight of the first polymer may be, for example, 1000 Daltons to 5,000,000 Daltons, 10,000 Daltons to 2,000,000 Daltons, or 100,000 Daltons to 1,000,000 Daltons. The first polymer may have a two-dimensional and/or three-dimensional network structure within the first polymer electrolyte.

The content of the first polymer may be, for example, 0.2 to 10 wt%, 0.5 to 5 wt%, 1 to 4 wt%, or 2 to 3 wt% with respect to the total weight of the first polymer electrolyte. Since the first polymer electrolyte includes the first polymer within this range, a gel polymer electrolyte can be formed. When the content of the first polymer is too low, it may be difficult to form a gel. When the content of the first polymer is too high, the first polymer electrolyte may harden, thereby causing cracks to occur within the first polymer electrolyte during a charge-discharge process.

The first polymer electrolyte may further include, for example, at least one selected from a first inorganic solid electrolyte, a first filler, a first organic solvent, and a first lithium salt.

Since the first polymer electrolyte further includes a first inorganic solid electrolyte, the elastic modulus of the first polymer electrolyte can increase, and the ion conductivity of the first polymer electrolyte can increase. Since the first polymer electrolyte additionally includes a first inorganic solid electrolyte, the internal resistance of a lithium metal battery including a catholyte can be further reduced, and a short circuit between the cathode and the anode can be more effectively suppressed. The first inorganic solid electrolyte may be, for example, an oxide-based solid electrolyte or a sulfide-based solid electrolyte. The first inorganic solid electrolyte may be selected from second inorganic solid electrolytes used in the catholyte. The first inorganic solid electrolyte may be omitted.

Since the first polymer electrolyte includes a first filler, the elastic modulus of the first polymer electrolyte can increase. Since the first polymer electrolyte has an increased elastic modulus, a short circuit between the cathode and the anode due to the growth of lithium dendrites can be more effectively prevented. The first filler may be selected from second fillers used in the anolyte. The first filler may be omitted.

Since the first polymer electrolyte further includes a first organic solvent, the flexibility of the first polymer electrolyte can increase, and the interfacial resistance between the first polymer electrolyte and the cathode active material can further decrease. The first organic solvent may be a carbonate-based organic solvent, but is not necessarily limited thereto, and any organic solvent used in lithium batteries in the related technical field may be used. The organic solvent is, for example, propylene carbonate, ethylene carbonate, fluoroethylene carbonate, butylene carbonate, dimethyl carbonate, diethyl carbonate, methyl ethyl carbonate, methyl propyl carbonate, ethyl propyl carbonate, methyl isopropyl carbonate, dipropyl carbonate, dibutyl carbonate, benzonitrile, acetonitrile, tetrahydrofuran, 2-methyltetrahydrofuran, y-butyrolactone, dioxolane, 4-methyldioxolane, N,N-dimethylformamide, dimethylacetamide, dimethyl sulfoxide, dioxane, 1,2-dimethoxyethane, sulfolane, dichloroethane, chlorobenzene, nitrobenzene, diethylene glycol, dimethyl ether, or a mixture thereof. The carbonate-based organic solvent may include, for example, ethylene carbonate, propylene carbonate, fluoroethylene carbonate, dimethyl carbonate, diethyl carbonate, ethylmethyl carbonate, or a combination thereof.

Since the first polymer electrolyte further includes a first lithium salt, the ion conductivity of the first polymer electrolyte can be improved. The first lithium salt may be any lithium salt used in the related technical field. The first lithium salt includes, for example, LiBF₄, LiPF₆, LiCIO₄, LiCF₃SO₃, LiN(CF₃SO₂)₂, LiN(C₂F₅SO₂)₂, LiC(CF₂SO₂)₃, LiBF₂(C₂O₄), LiSbF₆, LiAsF₆, LiC₄F₉SO₃, LiAlO₂, LiAlCl₄, LiN(CₓF₂ₓ₊₁SO₂)(C_{y}F_{2y+1}SO₂)(1≤x≤20, 1≤y≤20), LiCl, Lil, or a combination thereof. The concentration of the first lithium salt is, for example, 0.1 M to 5.0 M.

The catholyte 30a may be free of a compound including an alkylene oxide repeating unit. Since the compound including an alkylene oxide repeating unit has poor oxidation resistance, this compound may be oxidized at high voltage, thereby deteriorating the catholyte 30a. The compound including an alkylene oxide repeating unit may be, for example, a monomer including an alkylene oxide repeating unit, an oligomer including an alkylene oxide repeating unit, a polymer including an alkylene oxide repeating unit, or a combination thereof. The alkylene oxide group may be, for example, an ethylene oxide group. The oligomer including an alkylene oxide repeating unit may be, for example, polyethylene glycol. The polymer including an alkylene oxide repeating unit may be, for example, polyethylene oxide.

The catholyte 30a may be an organic electrolyte. The catholyte 30a may be an organic electrolyte that does not includes inorganic particles and is made of an organic material.

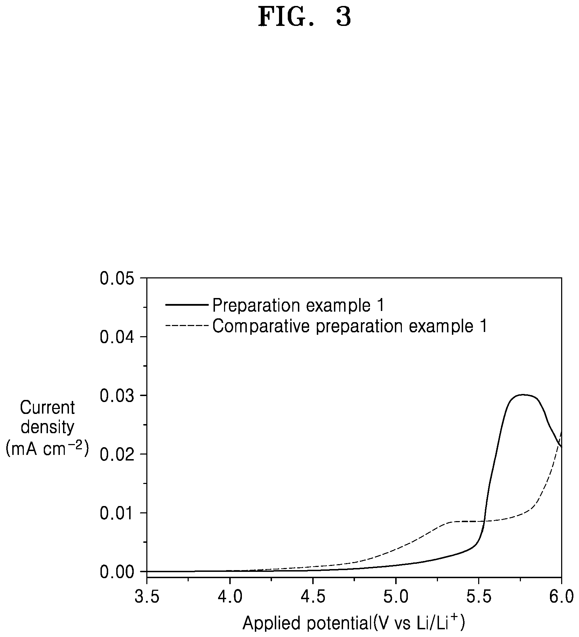

Referring to FIG. 3, the catholyte 30a may have a wide voltage window in which the current density measured at 5.0 V versus lithium metal by linear sweep voltammetry (LSV) performed at a sweep rate of 1 mV/s is 0.003 mA/cm² or less. Since the catholyte 30a has a low current density of 0.003 mA/cm² or less even at high voltage, it is found that side reactions are effectively suppressed in this voltage range. Since the catholyte 30a has a wide voltage window of 5.0 V versus lithium metal, the catholyte 30a may be suitably used as a cathode of a lithium metal battery having a cathode operating at a high voltage of 3.0 V or more.

The ion conductivity of the catholyte 30a may be, for example, 2×10⁻⁴ S/cm or more, 2.2×10⁻⁴ S/cm or more, or 2.4×10⁻⁴ S/cm or more at 25°C. Since the catholyte 30a has a high ion conductivity of 2×10⁻⁴ S/cm or more, the ion conductivity of the catholyte 30a can be improved, and the internal resistance of a lithium metal battery including the catholyte 30a can be further reduced.

The lithium ion transference number of the catholyte 30a may be, for example, 0.3 or more, 0.32 or more, or 0.34 or more at 25 °C. Since the catholyte 30a has a lithium ion transference number of 0.3 or more, the conduction efficiency of lithium ions within the catholyte 30a can be improved, and the internal resistance of a lithium metal battery including the catholyte 30a can be reduced.

The lithium ion conductivity of the catholyte 30a may be, for example, 6×10⁻⁵ S/cm or more, 7×10⁻⁵ S/cm or more, or 8×10⁻⁵ S/cm or more at 25 ° C. Since the catholyte 30a has a high lithium ion conductivity of 6×10⁻⁵ S/cm or more, the lithium ion conductivity of the catholyte 30a can be improved, and the internal resistance of a lithium metal battery including the catholyte 30a can be further reduced.

### [Electrolyte: porous support]

The lithium metal battery 1 may further include a porous support 40 disposed between the cathode 10 and the anode 20. The electrolyte 30 may be impregnated into the porous support 40.

The porous support 40 may be, for example, a porous film. The porous film may be, for example, a woven or nonwoven fabric. Any porous film commonly used in lithium batteries may be used. The porous film may include, for example, a glass fiber, an olefin resin, a fluorine resin, an ester resin, an imide resin, an acrylic resin, a cellulose resin, or a combination thereof. The olefin resin may include, for example, polyethylene, polypropylene, or a combination thereof. The fluorine resin may include, for example, polyvinylidene fluoride, polytetrafluoroethylene, or a combination thereof. The ester resin may include, for example, polyethylene terephthalate, polybutylene terephthalate, or a combination thereof. The imide resin may include, for example, polyamideimide, polyetherimide, or a combination thereof. The acrylic resin may include, for example, polyacrylonitrile, polyacrylate, or a combination thereof. The cellulose resin may include, for example, microbial cellulose, plant cellulose, animal cellulose, or a combination thereof.

The porous support 40 may be impregnated with a catholyte 30a. A composition for forming a catholyte may be injected into a porous support, and then cured to prepare a catholyte 30a impregnated into the porous support. As the porous support 40, a porous film having excellent impregnation capability for a composition for forming a catholyte including a first organic solvent may be used. The porous support 40 may be, for example, a separator.

The porous film is formed by the following example methods, but the formation of the porous film is not necessarily limited to these methods and may be adjusted according to required conditions.

First, a polymer resin, a filler, and a solvent are mixed to prepare a composition for forming a porous film. The composition for forming a porous film is directly applied on an electrode and dried to form a porous film. Alternatively, the composition for forming a porous film is cast and dried on a support, and then a porous film peeled from the support is laminated on an electrode to form a porous film. The polymer used in forming the porous film is not particularly limited, and the above-described resins may be used. Any polymer used in forming the porous film may be used as a binder for an electrode. The polymer used in forming the porous film includes, for example, vinylidene fluoride/hexafluoropropylene copolymer, polyvinylidene fluoride (PVDF), polyacrylonitrile, polymethyl methacrylate, or a combination thereof.

### [Electrolyte: Anolyte]

Referring to FIG. 1, the electrolyte 30 is disposed between the catholyte 30a and the anode 20 and includes an anolyte 30b disposed adjacent to the anode 20. The anolyte 30b includes a second polymer electrolyte, and the second polymer electrolyte includes a second polymer. The second polymer includes a third repeating unit derived from a second single-ion conducting monomer; and a fourth repeating unit derived from a first crosslinking monomer having a plurality of reactive functional groups. The second polymer includes a third repeating unit, thereby providing high ion conductivity and increased lithium ion conductivity. As a result, the internal resistance of the lithium metal battery including the anolyte 30b is reduced. Since the second polymer includes the fourth repeating unit, the anolyte 30b has a strong cross-linked structure, thereby effectively suppressing the formation of dendrites of the lithium metal anode 20 during charging and discharging and effectively blocking the contact between the lithium metal anode 20 and the catholyte 30a.

The second polymer includes a third repeating unit derived from a first single ion-conducting monomer.

The second single-ion conducting monomer may, for example, include an aromatic ring within the monomer molecule. Since the second single-ion conducting monomer includes an aromatic ring, the second polymer including the third repeating unit derived from the second single-ion conducting monomer may have an improved elastic modulus. Since the second polymer has an improved elastic modulus, the anolyte 30b can more effectively suppress the growth of lithium dendrites. The aromatic ring included in the second single-ion conducting monomer may be a hydrocarbon ring having 6 to 20 carbon atoms. The aromatic ring included in the second single-ion conducting monomer may be a phenylene ring, a naphthylene ring, or a combination thereof.

The second single-ion conducting monomer may, for example, include a reactive functional group, an anionic functional group, and a counter cation within the monomer molecule. Since the anionic functional group of the second single-ion conducting monomer is fixed within the second polymer in the anolyte 30b, the counter cation can be transferred and/or diffused more effectively within the anolyte 30b.

The second single-ion conducting monomer includes a reactive functional group, and the reactive functional group is a functional group that forms a third repeating unit of the second polymer through a crosslinking reaction with a crosslinking agent and/or another monomer. The crosslinking reaction is a thermal crosslinking reaction, an ultraviolet crosslinking reaction, or the like, but is not limited thereto, and any crosslinking reaction used in the related technical field may be used. The reactive functional group includes, but is not necessarily limited to, a vinyl group, an acrylic group, a methacrylic group, a (4-vinyl)phenyl group, or a combination thereof, and any group used as a reactive functional group in the related technical field may be used.

The second single-ion conducting monomer includes an ionic functional group, and the anionic functional group is a functional group capable of forming an anion in the anolyte 30b. The anionic functional group includes, but is not necessarily limited to, a carboxyl group, a sulfonate group, a sulfonylimide group, or a combination thereof, and any anionic functional group used in the related technical field may be used.

The second single-ion conducting monomer includes a counter cation, and the counter cation is, for example, an alkali metal cation. The alkali metal cation is, for example, a lithium cation, a sodium cation, a potassium cation, a rubidium cation, a cesium cation, or a combination thereof.

The content of the alkali metal cation included in the second polymer is, for example, 0.1 to 1 mol, 0.5 to 1 mol, 0.8 to 1 mol, or 0.9 to 1 mol per 1 mol of the first repeating unit.

The second polymer includes a fourth repeating unit derived from a second crosslinking monomer having a plurality of reactive functional groups.

The second crosslinking monomer may include, for example, two or more, three or more, or four or more reactive functional groups. As the number of reactive functional groups included in the second crosslinking monomer increases, the second crosslinking monomer can form a more rigid crosslinked product with the second single ion-conducting monomer. As a result, the durability of the anolyte 30b including the second polymer can be improved because the second polymer including the third repeating unit and the fourth repeating unit has a more rigid structure. The number of reactive functional groups included in one second crosslinking monomer may be, for example, 2 to 10, 3 to 8, or 4 to 6.

The second crosslinking monomer may be a monomer including an aromatic ring. Since the second crosslinking monomer includes an aromatic ring, the second polymer including the fourth repeating unit derived from the second crosslinking monomer may have an improved elastic modulus. Since the second polymer has an improved elastic modulus, the anolyte 30b can more effectively suppress the growth of lithium dendrites. The aromatic ring included in the second crosslinking monomer may be a hydrocarbon ring having 6 to 20 carbon atoms. The aromatic ring included in the second single-ion conducting monomer may be a phenylene ring, a naphthylene ring, or a combination thereof.

The second crosslinking monomer may include, for example, a vinyl monomer including a plurality of vinyl groups, an acrylic monomer including a plurality of acrylic groups, a methacrylic monomer including a plurality of methacrylic groups, or a combination thereof. The second crosslinking monomer may include, for example, 1,3-divinyl benzene, 1,4-divinyl benzene, 2,7-divinyl naphthalene, 1,9-divinyl naphthalene, p-xylene diacrylate, o-xylene diacrylate, m-xylene diacrylate, p-xylene dimethacrylate, o-xylene dimethacrylate, m-xylene dimethacrylate, naphthalene-1,5-diyl diacrylate, naphthalene-1,9-diyl diacrylate, or a combination thereof.

The molar ratio of the third repeating unit and fourth repeating unit included in the second polymer is, for example, 99: 1 to 1:99, 90:10 to 50:50, 90:10 to 66:33, 90:10 to 75: 25, or 99: 1 to 80:20.

The molecular weight of the second polymer may be, for example, 1000 Daltons or more, 10,000 Daltons or more, or 100,000 Daltons or more. The molecular weight of the third polymer may be, for example, 1000 Daltons to 5,000,000 Daltons, 10,000 Daltons to 2,000,000 Daltons, or 100,000 Daltons to 1,000,000 Daltons.

The content of the second polymer may be, for example, 0.2 to 10 wt%, 0.5 to 5 wt%, 1 to 4 wt%, or 2 to 3 wt%, with respect to the total weight of the second polymer electrolyte. Since the second polymer electrolyte includes the second polymer within this range, a gel polymer electrolyte can be formed. When the content of the second polymer is too low, it may be difficult to form a gel, or the elastic modulus of the anolyte may be excessively reduced, thus making it difficult to suppress the growth of lithium dendrites. When the content of the second polymer is too high, the second polymer electrolyte hardens to cause cracks to occur within the second polymer electrolyte during a charge-discharge process, and lithium dendrites may grow through these cracks.

The second polymer electrolyte may further include, for example, at least one selected from a second inorganic solid electrolyte, a second filler, a second lithium salt, and a third polymer.

Since the second polymer electrolyte further includes a second inorganic solid electrolyte, the elastic modulus of the second polymer electrolyte can increase, and the ion conductivity of the second polymer electrolyte can increase. Since the second polymer electrolyte additionally includes a third inorganic solid electrolyte, the internal resistance of the lithium metal battery 1 including the anolyte 30b can be further reduced, and a short circuit between the cathode 10 and the anode 20 can be more effectively suppressed.

The second inorganic solid electrolyte may be, for example, an oxide-based solid electrolyte. The oxide-based solid electrolyte is, for example, at least one selected from Li_{1+x+y}AlₓTi₂₋ₓSi_{y}P_{3-y}O₁₂ (0<x<2, 0≤y<3), BaTiO₃, Pb(Zr,Ti)O₃(PZT), Pb₁₋ₓLaₓZr_{1-y} Ti_{y}O₃(PLZT)(0≤x<1, 0≤y<1), PB(Mg₃Nb_{2/3})O₃-PbTiO₃(PMN-PT), HfO₂, SrTiO₃, SnO₂, CeO2, Na₂O, MgO, NiO, CaO, BaO, ZnO, ZrO₂, Y₂O₃, Al₂O₃, TiO₂, SiO₂, Li₃PO₄, LiₓTi_{y}(PO₄)₃(0<x<2, 0<y<3), LiₓAl_{y}Ti_{z}(PO₄)₃ (0<x<2, 0<y<1, 0<z<3), Li_{1+x+y}(Al, Ga)ₓ(Ti, Ge)₂₋ₓSi_{y}P_{3-y}O₁₂(0≤x≤1, 0≤y≤1), LiₓLa_{y}TiO₃ (0<x<2, 0<y<3), Li₂O, LiOH, Li₂CO₃, LiAlO₂, Li₂O-Al₂O₃-SiO₂-P₂O₅-TiO₂-GeO₂, and Li₃₊ₓLa₃M₂O₁₂(M = Te, Nb, or Zr, 1≤x≤10). A solid electrolyte may be prepared, for example, by a sintering method. The oxide-based solid electrolyte is, for example, a garnet-type solid electrolyte selected from Li₇La₃Zr₂O₁₂ (LLZO) and Li₃₊ₓLa₃Zr₂₋ₐMₐO₁₂ (M doped LLZO, M=Ga, W, Nb, Ta, or Al, 1≤x≤10).

The particle diameter of the oxide-based solid electrolyte is, for example, 10 nm to 5 µm, 50 nm to 3 µm, 100 nm to 1 µm, 100 nm to 900 nm, 200 nm to 800 nm, or 400 to 800 nm. Since the oxide-based solid electrolyte has a particle diameter within this range, the elastic modulus of the anolyte 30a can further increase.

The content of the second inorganic solid electrolyte included in the second polymer electrolyte may be, for example, 1 to 60 wt%, 5 to 60 wt%, 5 to 50 wt%, or 10 to 40 wt% with respect to the total weight of the second polymer electrolyte. Since the second polymer electrolyte includes the second inorganic solid electrolyte within this range, the elastic modulus of the anolyte 30b can further increase.

Since the second polymer electrolyte includes a second filler, the elastic modulus of the second polymer electrolyte can increase. Since the second polymer electrolyte has an increased elastic modulus, a short circuit between the cathode 10 and the anode 20 due to the growth of lithium dendrites can be more effectively prevented.

The second filler may be, for example, an inorganic particle. The inorganic particle may include, but are not necessarily limited to, at least one selected from a metal oxide, a carbon oxide, a carbon-based material, and an organic-inorganic composite, and any particle capable of improving the ion conductivity of the second polymer electrolyte and increasing the mechanical strength of the second polymer electrolyte in the related technical field may be used.

The inorganic particle may include, for example, a metal oxide. The metal oxide may be represented, for example, by MₐO_{c} (0<a≤3, 0<c≤5, where M is at least one metal selected from groups 2 to 16 of the Periodic Table). The metal oxide may be selected from, for example, Al₂O₃, NbO, NbO₂, Nb₂O₅, MgO, Sc₂O₃, TiO₂, ZrO₂, V₂O₃, WO₂, MnO₂, Fe₂O₃, Co₃O₄, PdO, CuO, AgO, ZnO, Sb₂O₃, SiO₂, SeO₂, BaTiO₃, and metal organic framework (MOF). The inorganic particle may include, for example, a carbon oxide, a carbon-based material, or an organic-inorganic composite. The inorganic particle may include at least one selected from, for example, graphite oxide, graphene oxide, polyhedral oligomeric silsesquioxanes (POSS), Li₂CO₃, Li₃PO₄, Li₃N, Li₃S₄, Li₂O, and montmorillonite.

The particle diameter of the inorganic particle is, for example, 1 nm to 1 µm, 5 nm to 800 nm, 10 nm to 600 nm, 15 nm to 500 nm, or 20 to 400 nm. Since the inorganic particle has a particle diameter within this range, the elastic modulus of the anolyte 30a can further increase.

The inorganic particle may be, for example, porous. The inorganic particle may be, for example, a mesoporous particle.

The content of the second filler included in the second polymer electrolyte may be, for example, 1 to 20 wt%, 3 to 15 wt%, or 5 to 15 wt% with respect to the total weight of the second polymer electrolyte. Since the second polymer electrolyte includes the second filler within this range, the elastic modulus of the anolyte 30b can further increase.

The second filler may be, for example, a reactive filler having a reactive functional group on its surface. The reactive filler may be, for example, a reactive metal oxide having a reactive functional group on its surface.

The reactive functional group included in the second filler is a functional group including a double bond, and may be, for example, a vinyl group, an acrylic group, a methacrylic group, or a combination thereof.

The second polymer electrolyte includes a second filler and a second polymer, and the second filler may be chemically bonded to the second polymer through a reactive functional group disposed on the surface of the second filler. Since the second filler is chemically crosslinked to the second polymer, the elastic modulus of the second polymer electrolyte can further increase. Therefore, the anolyte 30b can more effectively prevent a short circuit between the cathode and the anode due to the growth of lithium dendrites.

Since the second polymer electrolyte includes a second lithium salt, the ion conductivity of the second polymer electrolyte can be improved. Any lithium salt used in the related technical field may be used as the second lithium salt. The second lithium salt includes, for example, LiBF₄, LiPF₆, LiCIO₄, LiCF₃SO₃, LiN(CF₃SO₂)₂, LiN(C₂F₅SO₂)₂, LiC(CF₂SO₂)₃, LiBF₂(C₂O₄), LiSbF₆, LiAsF₆, LiC₄F₉SO₃, LiAlO₂, LiAlCl₄, LiN(CₓF₂ₓ₊₁SO₂)(C_{y}F_{2y+1}SO₂)(1≤x≤20, 1≤y≤20), LiCl, Lil, or a combination thereof. The content of the second lithium salt may be, for example, 1 to 30 wt%, 10 to 25 wt%, or 15 to 25 wt%, with respect to the total weight of the second polymer electrolyte.

The second polymer electrolyte may further include a third polymer. The third polymer is, for example, an ion-conducting polymer. The third polymer may have ion conductivity, and may be a polymer having high stability toward lithium metal. The third polymer may, for example, serve to transport ions across a lithium metal surface. The third polymer may, for example, serve to block a contact between the anode and the catholyte.

The ion conducting polymer may be, for example, polystyrene sulfonate (PSS), a polyvinylidene fluoride-hexafluoropropylene (PVDF-HFP) copolymer, polyvinyl fluoride (PVF), polyvinylidene fluoride (PVDF), poly(methylmethacrylate) (PMMA), polyethylene oxide (PEO), polyacrylonitrile (PAN), polytetrafluoroethylene (PTFE), polyethylenedioxythiophene (PEDOT), polypyrrole (PPY), polyacrylonitrile (PAN), polyaniline, polyacetylene, or a combination thereof.

The third polymer may be an ion conducting polymer including an alkylene oxide repeating unit. The alkylene oxide repeating unit may be an ethylene oxide repeating unit. The third polymer may be, for example, polyethylene oxide. The molecular weight of polyethylene oxide may be, for example, 1,000 Daltons to 500,000 Daltons.

The content of the third polymer may be, for example, 1 to 50 wt%, 10 to 50 wt%, 20 to 50 wt%, 20 to 40 wt%, or 30 to 40 wt% of the total weight of the second polymer electrolyte.

The electrolyte 30 includes a catholyte 30a and an anolyte 30b, and each of the catholyte 30a and the anolyte 30b may be a polymer gel electrolyte. Since the electrolyte 30 is a polymer gel electrolyte, a short circuit between the cathode 10 and the anode 20 due to the growth of lithium dendrites can be more effectively prevented, and a risk such as electrolyte leakage can be suppressed.

The elastic modulus of the anolyte 30b may be greater than the elastic modulus of the catholyte 30a. Since the anolyte 30b is an organic-inorganic composite electrolyte including inorganic particles, the anolyte 30b may have a higher elastic modulus than the catholyte 30a. Since the anolyte 30b has a larger elastic modulus than the catholyte 30a, side reactions between the catholyte 30a and lithium metal can be effectively blocked.

The difference between the elastic modulus of the anolyte 30b and the elastic modulus of the catholyte 30a may be 1 MPa or more, 10 MPa or more, 100 MPa or more, or 1 GPa or more.

Since the anolyte 30b has a relatively high elastic modulus, the growth of lithium dendrites can be more effectively suppressed, and a short circuit between the cathode 10 and the anode 20 can be effectively prevented.

The thickness of the catholyte 30a may be greater than the thickness of the anolyte 30b. Since the thickness of the catholyte 30a is greater than that of the anolyte 30b, a short circuit between the cathode 10 and the anode 20 can be prevented more effectively.

The thickness of the lithium metal may be greater than the thickness of the anolyte 30b. Since the thickness of the lithium metal is greater than the thickness of the anolyte 30b, the energy density of the lithium metal battery 1 can be improved.

The thickness of the catholyte 30a may be, for example, the thickness of the catholyte 30a impregnated in the porous support. The thickness of the catholyte 30a may be, for example, the thickness of the porous support. The thickness of the catholyte 30a may be, for example, the thickness of the separator.

The thickness of the catholyte 30a is, for example, 5 to 50 µm, 5 to 40 µm, 5 to 30 µm, or 8 to 25 µm. Since the catholyte 30a has a thickness within this range, a short circuit between the cathode 10 and the anode 20 can be effectively prevented. When the thickness of the catholyte 30a increases excessively, the energy density of the lithium metal battery 1 may decrease. When the thickness of the catholyte 30a decreases excessively, the possibility of a short circuit between the cathode 10 and the anode 20 may increase.

The thickness of the lithium metal may be, for example, 1 to 500 µm, 5 to 300 µm, or 10 to 200 µm. When the thickness of the lithium metal is too thin, the cycle characteristics of the lithium metal battery deteriorate. When the thickness of the lithium metal is too thick, the volume change of the lithium metal battery increases excessively during charging and discharging, so that it may be difficult to maintain mechanical stability, and the efficiency of active material utilization may be reduced due to the use of excessive active materials.

The thickness of the anolyte 30b may be, for example, 1 to 50 µm, 1 to 30 µm, or 1 to 20 µm. Since the anolyte 30b has a thickness within this range, the decrease in energy density of the lithium metal battery can be minimized, and the growth of lithium dendrites can be effectively suppressed.

### [Cathode]

Referring to FIG. 1, a lithium metal battery 1 according to an embodiment includes a cathode 10, and the cathode 10 includes a cathode current collector 11 and a cathode active material layer 12 disposed on one side of the cathode current collector 11.

### [Cathode: Cathode active material layer]

The cathode active material layer 12 includes a cathode active material. The cathode active material may be any material used in the related technical field, for example, a lithium-containing metal oxide. As the cathode active material, for example, at least one of composite oxides of lithium and metal selected from cobalt, manganese, nickel, and combinations thereof, and, as specific example, the composite oxide may be a compound represented by any one of Formulae of LiₐA_{1-b}B_{b}D₂ (where 0.90 ≤a≤ 1, 0 ≤ b ≤ 0.5); LiₐE_{1-b}B_{b}O₂₋ₑD_{c} (where 0.90 ≤ a ≤ 1, 0 ≤ b ≤ 0.5, 0 ≤ c ≤ 0.05); LiE_{2-b}B_{b}O_{4-c}D_{c} (where 0 ≤ b ≤ 0.5, 0 ≤ c ≤ 0.05); LiₐNi_{1-b-c}Co_{b}B_{c}O*_{α}* (where 0.90 ≤ a ≤ 1, 0 ≤ b ≤ 0.5, 0 ≤ c ≤ 0.05, 0 < α ≤ 2); LiₐNi_{1-b-e}Co_{b}B_{c}O_{2-*α*}F*_{α}* (where 0.90 ≤ a ≤ 1, 0 ≤ b ≤ 0.5, 0 ≤ c ≤ 0.05, 0 < α < 2); LiₐN_{1-b-e}Co_{b}BₑO_{2-*α*}F₂ (where 0.90 ≤ a ≤ 1, 0 ≤ b ≤ 0.5, 0 ≤ c ≤ 0.05, 0 < α < 2); LiₐN_{1-b-c}Mn_{b}B_{c}D*_{α}* (where 0.90 ≤ a ≤ 1, 0 ≤ b ≤ 0.5, 0 ≤ c ≤ 0.05, 0 < α ≤ 2); LiₐNi_{1-b-e}Mn_{b}BₑO_{2-*α*}F*_{α}* (where 0.90 ≤ a ≤ 1, 0 ≤ b ≤ 0.5, 0 ≤ c ≤ 0.05, 0 < α < 2); LiₐNi_{1-b-c}Mn_{b}B_{c}O_{2-*α*}F₂ (where 0.90 ≤ a ≤ 1, 0 ≤ b ≤ 0.5, 0 ≤ c ≤ 0.05, 0 < α < 2); LiₐNi_{b}E_{c}G_{d}O₂ (where 0.90 ≤ a ≤ 1, 0 ≤ b ≤ 0.9, 0 ≤ c ≤ 0.5, 0.001 ≤ d ≤ 0.1); LiₐNi_{b}Co_{c}Mn_{d}GeO₂ (where, 0.90 ≤ a ≤ 1, 0 ≤ b ≤ 0.9, 0 ≤ c ≤ 0.5, 0 ≤ d ≤0.5, 0.001 ≤ e ≤ 0.1); LiₐNiG_{b}O₂ (where, 0.90 ≤ a ≤ 1, 0.001 ≤ b ≤ 0.1); LiₐCoG_{b}O₂ (where, 0.90 ≤ a ≤ 1, 0.001 ≤ b ≤ 0.1); LiₐMnG_{b}O₂ (where, 0.90 ≤ a ≤ 1, 0.001 ≤ b ≤ 0.1); LiₐMn₂GeO₄ (where, 0.90 ≤ a ≤ 1, 0.001 ≤ b ≤ 0.1); QO₂; QS₂; LiQS₂; V₂O₅; LiV₂O₅; LilO₂; LiNiVO₄; Li_{(3-f)}J₂(PO₄)₃ (0 ≤ f ≤ 2); Li_{(3-f)}Fe₂(PO₄)₃ (0 ≤ f ≤ 2); and LiFePO₄.

In Formulae representing the above-described compounds, A is Ni, Co, Mn, or a combination thereof; B is Al, Ni, Co, Mn, Cr, Fe, Mg, Sr, V, a rare earth element, or a combination thereof; D is O, F, S, P, or a combination thereof; E is Co, Mn, or a combination thereof; F is F, S, P, or a combination thereof; G is Al, Cr, Mn, Fe, Mg, La, Ce, Sr, V, or a combination thereof; Q is Ti, Mo, Mn, or a combination thereof; I is Cr, V, Fe, Sc, Y, or a combination thereof; and J is V, Cr, Mn, Co, Ni, Cu, or a combination thereof. It is also possible to use a compound having a coating layer added to the surface of the above-described compound, and it is also possible to use a mixture of the above-described compound and a compound having a coating layer added thereto. The coating layer added to the surface of the above-described compound includes a coating element compound of oxide of a coating element, hydroxide of a coating element, oxyhydroxide of a coating element, oxycarbonate of a coating element, or hydroxycarbonate of a coating element The compound forming this coating layer is amorphous or crystalline. The coating element included in the coating layer is Mg, Al, Co, K, Na, Ca, Si, Ti, V, Sn, Ge, Ga, B, As, Zr, or a mixture thereof. A method for forming the coating layer is selected within a range that does not adversely affect the physical properties of the cathode active material. A coating method is, for example, spray coating, dipping, or the like. Since specific coating methods are well understood by those skilled in the art, a detailed description will be omitted.

The cathode active material is, for example, LiₐNiₓCo_{y}M_{z}O_{2-b}A_{b} (1.0≤a≤1.2, 0≤b≤0.2, 0.8≤x<1, 0<y≤0.3, 0<z≤0.3, and x+y+z=1, M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B) or a combination thereof, and A is F, S, Cl, Br or a combination thereof), LiNiₓCo_{y}Mn_{z}O₂ (0.8≤x≤0.95, 0≤y≤0.2, 0<z≤0.2, and x+y+z=1), LiNiₓCo_{y}Al_{z}O₂ (0.8≤x≤0.95, 0≤y≤0.2, 0<z≤0.2, and x+y+z=1), LiNiₓCo_{y}Mn_{z}Al_{w}O₂ (0.8≤x≤0.95, 0≤y≤0.2, 0<z≤0.2, 0<w≤0.2, and x+y+z+w=1), LiₐCoₓM_{y}O_{2-b}A_{b} (1.0≤a≤1.2, 0≤b≤0.2, 0.9≤x≤1, 0≤y≤0.1, and x+y=1, M is manganese (Mn), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B) or a combination thereof, and A is F, S, Cl, Br or a combination thereof), LiₐNiₓMn_{y}M'_{z}O_{2-b}A_{b} (1.0≤a≤1.2, 0≤b≤0.2, 0<x≤0.3, 0.5≤y<1, 0<z≤0.3, and x+y+z=1, M' is cobalt (Co), niobium (Nb), vanadium (V), magnesium (Mg), gallium (Ga), silicon (Si), tungsten (W), molybdenum (Mo), iron (Fe), chromium (Cr), copper (Cu), zinc (Zn), titanium (Ti), aluminum (Al), boron (B) or a combination thereof, and A is F, S, Cl, Br or a combination thereof), LiₐM1ₓM2_{y}PO_{4-b}X_{b} (0.90≤a≤1.1, 0≤x≤0.9, 0≤y≤0.5, 0.9<x+y<1.1, 0≤b≤2, M1 is chromium (Cr), manganese (Mn), iron (Fe), cobalt (Co), nickel (Ni), copper (Cu), zirconium (Zr), or a combination thereof, M2 is magnesium (Mg), calcium (Ca), strontium (Sr), barium (Ba), titanium (Ti), zinc (Zn), boron (B), niobium (Nb), gallium (Ga), indium (In), molybdenum (Mo), tungsten (W), aluminum (Al), silicon (Si), chromium (Cr), vanadium (V), scandium (Sc), yttrium (Y), or a combination thereof, and X is O, F, S, P, or a combination thereof), LiₐM3_{z}PO₄ (0.90≤a≤1.1, 0.9≤z≤1.1, M3 is chromium (Cr), manganese (Mn), iron (Fe), cobalt (Co), nickel (Ni), copper (Cu), zirconium (Zr), or a combination thereof).

The cathode active material layer 12 includes a conductive material. As the conductive material, carbon black, graphite particles, natural graphite, artificial graphite, acetylene black, Ketjen black, carbon fibers; carbon nanotubes; metal powders, metal fibers or metal tubes of copper, nickel, aluminum, and silver; and conductive polymers such as polyphenylene derivatives may be used, but the disclosure is not limited thereto, and any material used as a conductive material in the related technical field may be used. Alternatively, the cathode may not include an additional conductive material.

The cathode active material layer 12 includes, for example, a binder. As the binder, a vinylidene fluoride/hexafluoropropylene copolymer, polyvinylidene fluoride, polyacrylonitrile, polymethyl methacrylate, polytetrafluoroethylene (PTFE), a mixture of the above-described polymers, a styrene butadiene rubber-based polymers, or the like may be used.

The content of the cathode active material included in the cathode active material layer 12 may be 80 wt% to 99 wt%, 90 wt% to 99 wt%, or 95 wt% to 99 wt%, with respect to the total weight of the cathode active material layer 12.

The content of the conductive material including the cathode active material layer 12 may be 0.1 wt% to 10 wt% or 0.1 wt% to 5 wt%, with respect to the total weight of the cathode active material layer 12.

The content of the binder included in the cathode active material layer 12 may be 0.1 wt% to 10 wt% or 0.1 wt% to 5 wt%, with respect to the total weight of the positive electrode active material layer 12.

The contents of the cathode active material, conductive material, and binder included in the cathode are at levels typically used in lithium batteries. Depending on the purpose and configuration of the lithium battery, one or more of the conductive material and the binder may be omitted.

### [Cathode: Cathode current collector]

Any material that constitutes the cathode current collector 11 may be used as long as it is conductive and does not react with lithium, that is, does not form an alloy or compound with lithium. The cathode current collector 11 is made of, for example, a metal or an alloy. The cathode current collector 11 may be made of, for example, aluminum (Al), indium (In), copper (Cu), magnesium (Mg), stainless steel, titanium (Ti), iron (Fe), cobalt (Co), nickel (Ni), zinc (Zn), germanium (Ge), or an alloy thereof. The cathode current collector 11 may have a form selected from, for example, a sheet, a foil, a film, a plate, a porous body, a mesoporous body, a body containing through-holes, a polygonal ring body, a mesh body, a foam body, and a nonwoven body, but is not necessarily limited to such a form, and any form used in the related technical field is possible.

### [Anode]

Referring to FIG. 1, a lithium metal battery 1 according to an embodiment includes an anode 20, and the anode 20 includes an anode current collector 21 and an anode active material layer 22 disposed on one side of the anode current collector 21.

### [Anode: Anode active material layer]

The anode active material layer 22 includes a lithium metal or a lithium alloy. The anode active material layer 22 may include, for example, lithium foil, lithium powder, or a combination thereof. The lithium foil may include, for example, a lithium metal foil, a lithium alloy foil, or a combination thereof. The lithium powder may include lithium metal powder, lithium alloy powder, or a combination thereof. The lithium alloy is an alloy of lithium and other metals alloyable with lithium, for example, a lithium-silver alloy, a lithium-zinc alloy, a lithium-magnesium alloy, a lithium-tin alloy, or the like. The anode active material layer 22 including a lithium metal foil may be, for example, a lithium metal layer. The anode active material layer 22 including a lithium metal foil may be, for example, a lithium alloy layer. The anode active material layer 22 including lithium metal powder and/or lithium alloy powder may be introduced by applying a slurry including lithium powder, a binder, and the like on an anode current collector. The binder may be a fluorine-based binder, such as polyvinylidene fluoride (PVDF). The anode active material layer 22 may not include a carbon-based anode active material.

The thickness of the lithium metal foil may be, for example, 1 µm to 50 µm, 1 µm to 30 µm, or 1 µm to 20 µm. Since the lithium metal foil has a thickness within this range, the lifespan characteristics of a lithium metal battery can be further improved. The particle diameter of the lithium metal powder may be, for example, 0.1 µm to 3 µm, 0.1 µm to 2 µm, or 0.1 µm to 2 µm. Since the lithium metal powder has a thickness within this range, the lifespan characteristics of a lithium metal battery can be further improved. The thickness of the anode active material layer 22 may be, for example, 1 µm to 100 µm, 1 µm to 80 µm, 1 µm to 60 µm, or 1 µm to 50 µm.

### [Anode: Anode current collector]

The anode current collector 21 includes, for example, a metal substrate. The metal substrate includes a first metal as a main component, or is made of the first metal. The content of the first metal included in the metal substrate is, for example, 90 wt% or more, 95 wt% or more, 99 wt% or more, or 99.9 wt% or more with respect to the total weight of the metal substrate. The metal substrate may be composed of, for example, a material that does not react with lithium, that is, does not form an alloy and/or a compound with lithium. The first metal may be, for example, copper (Cu), nickel (Ni), stainless steel (SUS), iron (Fe), or cobalt (Co), but is not necessarily limited thereto, and any metal that is used as a current collector in the related technical field may be used. The first metal substrate may be composed of, for example, one of the above-described metals, or an alloy of two or more metals. The metal substrate has a form of, for example, a sheet or foil. The thickness of the anode current collector 21 may be, for example, 5 µm to 50 µm, 10 µm to 50 µm, 10 µm to 40 µm, or 10 µm to 30 µm, but is not necessarily limited to this range, and may be selected depending on the required characteristics of a lithium metal battery.

The anode current collector 21 may further include a coating layer (not shown) including a second metal on a metal substrate. The anode current collector 21 may include, for example, a metal substrate; and a coating layer disposed on the metal substrate and including a second metal. The second metal has a higher Mohs hardness than the first metal. That is, since the coating layer including the second metal is harder than the metal substrate including the first metal, deterioration of the first metal substrate can be prevented. The Mohs hardness of the material constituting the metal substrate is, for example, 5.5 or less. The Mohs hardness of the first metal is, for example, 5.5 or less, 5.0 or less, 4.5 or less, 4.0 or less, 3.5 or less, or 3.0 or less. The Mohs hardness of the first metal may be, for example, 2.0 to 6.0. The Mohs hardness of the material constituting the coating layer is, for example, 6.0 or more. For example, the Mohs hardness of the second metal is 6.0 or more, 6.5 or more, 7.0 or more, 7.5 or more, 8.0 or more, 8.5 or more, or 9.0 or more. The Mohs hardness of the second metal may be, for example, 6.0 to 12. When the Mohs hardness of the second metal is too low, it may be difficult to suppress deterioration of the anode current collector. When the Mohs hardness of the second metal is too high, it may not be easy to process. The second metal is, for example, at least one selected from titanium (Ti), manganese (Mn), niobium (Nb), tantalum (Ta), iridium (Ir), vanadium (V), rhenium (Re), osmium (Os), tungsten (W), chromium (Cr), boron (B), ruthenium (Ru), and rhodium (Rh). The thickness of the coating layer may be, for example, 10 nm to 1 µm, 50 nm to 500 nm, 50 nm to 200 nm, or 50 nm to 150 nm.

### [Method for manufacturing lithium metal battery]

A method for manufacturing a lithium metal battery includes: preparing a composition for forming a catholyte; preparing a composition for forming an anolyte; applying the composition for forming an anolyte onto a lithium metal anode; crosslinking the applied composition for forming an anolyte to prepare the lithium metal anode coated with an anolyte; stacking the lithium metal anode coated with the anolyte, a porous film, and a cathode to prepare an assembly; injecting the composition for forming a catholyte into the assembly; and crosslinking the injected composition for forming a catholyte to prepare a lithium metal battery including a catholyte, wherein the lithium metal battery includes a cathode, an anode, and an electrolyte disposed between the cathode and the anode, the catholyte includes a first polymer electrolyte, and the first polymer electrolyte includes a first polymer, and the first polymer includes a first repeating unit derived from a first single-ion conducting monomer and a second repeating unit derived from a first crosslinking monomer having a plurality of reactive functional groups. In the lithium metal battery manufactured by this method, an electrolyte includes a catholyte adjacent to a cathode and an anolyte adjacent to an anode, thereby preventing the deterioration of the electrolyte at the high-voltage cathode and preventing the growth of lithium dendrites on the surface of the anode. As a result, deterioration of the lithium metal battery is prevented and the cycle characteristics of the lithium metal battery are improved.

A composition for forming a catholyte is prepared. The composition for forming a catholyte includes a first single-ion conducting monomer, a first crosslinking monomer, a thermal initiator, and a liquid electrolyte. The content of the first single-ion conducting monomer may be 1 to 20 wt% of the total weight of the composition for forming a catholyte. The content of the first crosslinking monomer may be 1 to 20 wt% of the total weight of the composition for forming a catholyte. The thermal initiator is t-amyl peroxide or an azobis thermal initiator, but is not limited thereto, and any thermal initiator used in the related technical field may be used. The types of the first single-ion conducting monomer, the second crosslinking monomer, and the liquid electrolyte refer to the above-described catholyte. The composition for forming a catholyte is prepared, for example, by adding a first single ion-conducting monomer, a first crosslinking monomer, and a thermal initiator to a liquid electrolyte.

A composition for forming an anolyte is prepared. The composition for forming an anolyte includes a second single-ion conducting monomer, a second crosslinking monomer, a third polymer, a second inorganic solid electrolyte, a second filler, a second lithium salt, a thermal initiator, and a solvent. The content of the second single-ion conducting monomer may be 1 to 20 wt% of the total weight of the composition for forming an anolyte. The content of the second crosslinking monomer may be 1 to 20 wt% of the total weight of the composition for forming an anolyte. The content of the third polymer may be 1 to 40 wt% of the total weight of the composition for forming an anolyte. The content of the second inorganic solid electrolyte may be 5 to 60 wt% of the total weight of the composition for forming an anolyte. The content of the second filler may be 5 to 15 wt% of the total weight of the composition for forming an anolyte. The content of the second lithium salt may be 1 to 30 wt% of the total weight of the composition for forming an anolyte. The thermal initiator is t-amyl peroxide or an azobis thermal initiator, but is not limited thereto, and any thermal initiator used in the related technical field may be used. The types of the second single-ion conducting monomer, the second crosslinking monomer, the third polymer, the second inorganic solid electrolyte, the second filler, the second lithium salt, and the liquid electrolyte refer to the above-described anolyte. The composition for forming an anolyte is prepared, for example, by adding a second single-ion conducting monomer, a second crosslinking monomer, a third polymer, a second inorganic solid electrolyte, a second filler, a second lithium salt, and a thermal initiator to an organic solvent. The organic solvent includes, but is not limited to, tetrahydrofuran, N-methylpyrrolidone, etc., and any solvent used in the related technical field may be used. In the composition for forming an anolyte, the contents of the second single ion-conducting monomer, the second crosslinking monomer, the third polymer, the second inorganic solid electrolyte, the second filler, and the second lithium salt are based on the solid content excluding the solvent.

An anode in which a lithium metal or a lithium alloy is disposed on an anode current collector is prepared. The composition for forming an anolyte is applied onto a lithium metal anode. The coating method is not particularly limited, and includes bar coating, spin coating, and the like. The coating may be performed, for example, by using a doctor blade.

The composition for forming an anolyte is crosslinked to prepare a lithium metal anode coated with an anolyte. The crosslinking is, for example, thermal crosslinking, ultraviolet crosslinking, or the like. The thermal crosslinking may be performed, for example, at a temperature of 60 to 80 °C for 1 hour to 2 hours, but is not limited to these conditions, and may be appropriately selected depending on the degree of crosslinking required.

A cathode is prepared. For example, a cathode active material composition is prepared by mixing a cathode active material, a conductive material, a binder, and a solvent. The prepared cathode active material composition is directly applied onto a cathode current collector and dried to manufacture a cathode plate having a cathode active material layer formed thereon. Alternatively, the cathode active material composition is cast on a separate support, and is peeled off the support to obtain a film, and then the obtained film is laminated onto a cathode current collector to manufacture a cathode plate having a cathode active material layer formed thereon. The solvent is not particularly limited, for example, N-methylpyrrolidone. It is also possible to form pores inside an electrode plate by further adding a plasticizer or a pore forming agent to the cathode active material composition. The cathode may be manufactured by the above-described method, but the disclosure is not necessarily limited to this method. The types and contents of the cathode active material, the conductive material, and the binder refer to the above-described cathode active material layer.

A lithium metal anode coated with an anolyte, a porous film, and a cathode are stacked to prepare an assembly. The assembly is accommodated in a can or a pouch. The porous film refers to the above-described catholyte.

A composition for forming a catholyte is injected into the assembly. The composition for forming a catholyte is injected into the assembly accommodated in a can or a pouch, and thus the composition for forming a catholyte is impregnated into the porous film and the cathode active material layer.

The injected composition for forming a catholyte is crosslinked to manufacture a lithium metal battery including a catholyte. The crosslinking is, for example, thermal crosslinking, ultraviolet crosslinking, or the like. The thermal crosslinking may be performed, for example, at a temperature of 60 to 80 °C for 1 hour to 2 hours, but is not limited to these conditions, and may be appropriately selected depending on the degree of crosslinking required. As the composition for forming a catholyte is crosslinked, a catholyte is formed in the region where the porous film and the cathode active material layer are arranged. The catholyte is disposed within the pores included in the cathode active material layer and the pores included in the porous film.

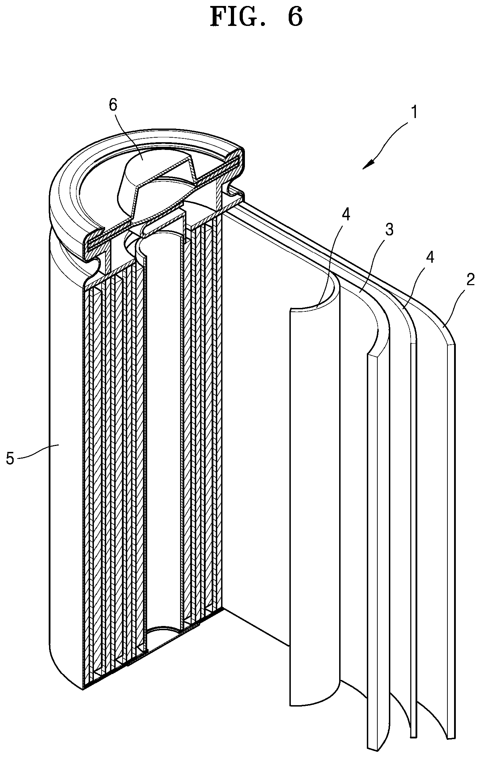

The manufactured lithium metal battery may have a structure of FIGS. 6 to 8 below.

Referring to FIG. 6, a lithium metal battery 1 according to an embodiment includes a cathode 3, the above-described anode 2, and a separator 4. The cathode 3, the anode 2, and the separator 4 are wound or folded to form a battery structure 7. The formed battery structure 7 is accommodated in a battery case 5. A composition for forming a catholyte is injected into the battery case 5, crosslinked, and sealed with a cap assembly 6, thereby completing a lithium metal battery 1. The battery case 5 is cylindrical, but is not necessarily limited to this shape, and is, for example, rectangle, thin-film, or the like.

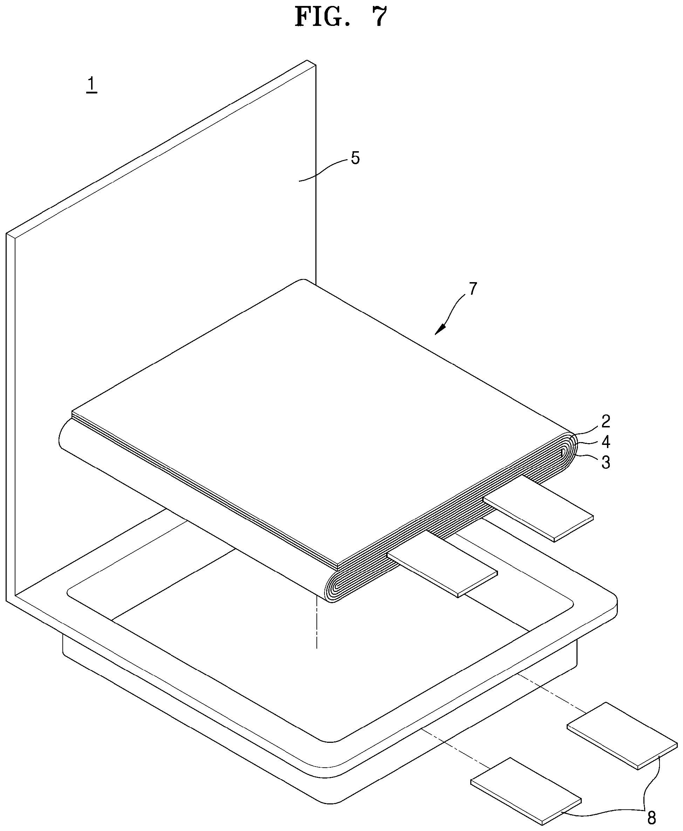

Referring to FIG. 7, a lithium metal battery 1 according to an embodiment includes a cathode 3, the above-described anode 2, and a separator 4. The separator 4 is placed between the cathode 3 and the anode 2, and the cathode 3, the anode 2, and the separator 4 are wound or folded to form a battery structure 7. The formed battery structure 7 is accommodated in a battery case 5. The lithium metal battery 1 may include electrode tabs 8 that act as electrical paths for inducing a current formed in the battery structure 7 to the outside. A composition for forming a catholyte is injected into the battery case 5, crosslinked, and sealed, thereby completing a lithium metal battery 1. The battery case 5 is cylindrical, but is not necessarily limited to this shape, and is, for example, rectangle, thin-film, or the like.

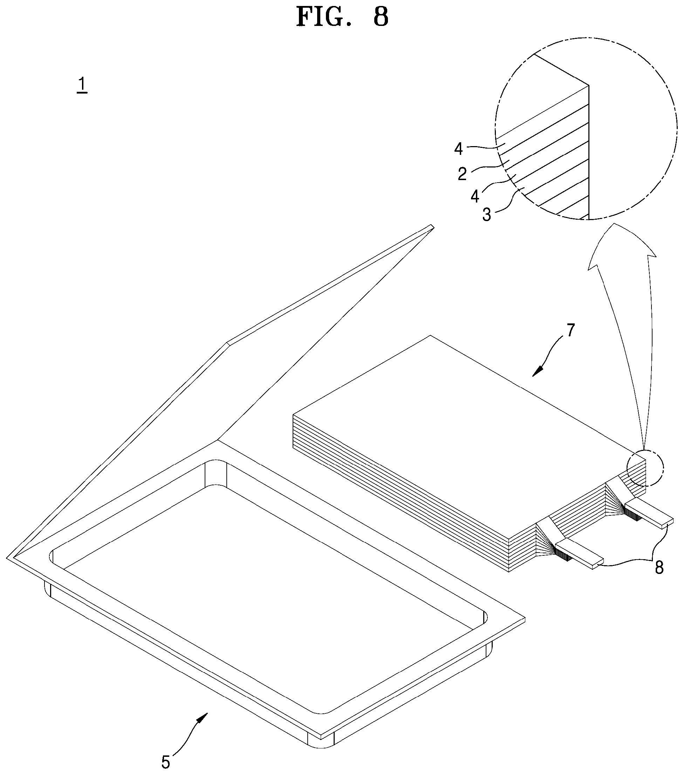

Referring to FIG. 8, a lithium metal battery 1 according to an embodiment includes a cathode 3, the above-described anode 2, and a separator 4. The separator 4 is placed between the cathode 3 and the anode 2 to form a battery structure 7. The battery structure 7 is stacked in a bi-cell structure, and then accommodated in a battery case 5. The lithium metal battery 1 may include electrode tabs 8 that act as electrical paths for inducing a current formed in the battery structure 7 to the outside. A composition for forming a catholyte is injected into the battery case 5, crosslinked, and sealed, thereby completing a lithium metal battery 1. The battery case 5 is cylindrical, but is not necessarily limited to this shape, and is, for example, rectangle, thin-film, or the like.

A pouch-type lithium metal battery uses a pouch as a case for the lithium metal battery of FIGS. 6 to 8. A pouch-type lithium metal battery may include at least one battery structure. A separator is placed between the cathode and the anode to form a battery structure. A plurality of battery structures are laminated in a thickness direction, then impregnated with an organic electrolyte, and accommodated and sealed in a pouch to complete a pouch-type lithium metal battery. For example, although not shown in the drawings, the above-described cathode, anode, and separator may be simply laminated and accommodated in a pouch in the form of an electrode assembly, or may be wound or folded into a jelly roll-shaped electrode assembly and then accommodated in a pouch. Subsequently, a composition for forming a catholyte is injected into the pouch, thermally crosslinked, and sealed to complete a lithium metal battery.

Since the lithium metal battery of the present disclosure has excellent discharge capacity and lifespan characteristics and high energy density, it is used in, for example, electric vehicles (EVs). For example, the lithium metal battery is used in hybrid vehicles such as plug-in hybrid electric vehicles (PHEV). The lithium metal battery is also used in fields that require large amounts of power storage. For example, the lithium metal battery is used in electric bicycles, power tools, etc.

A plurality of lithium metal batteries are stacked to form a battery module, and a plurality of battery modules form a battery pack. This battery pack may be used in any device that requires high capacity and high output. For example, this battery pack may be used in laptops, smartphones, electric vehicles, etc. A battery module includes, for example, a plurality of batteries and a frame that holds these batteries. A battery pack includes, for example, a plurality of battery modules and a bus bar connecting these battery modules. The battery module and/or battery pack may further include a cooling device. A plurality of battery packs are controlled by a battery management system. The battery management system includes a battery pack and a battery control device connected to the battery pack.

### Mode for the Invention

The present inventive concept will be described in more detail the following Examples and Comparative Examples. However, these examples are intended to illustrate the present inventive concept, and the scope of the present inventive concept is not limited thereto.

### (Composition for forming catholyte and Catholyte)

### Preparation Example 1: MTFSILi + ester-based crosslinker (PETTA) + liquid electrolyte

0.6 M LiBF₄ and 0.6 M lithium difluoro(oxalate)borate (LiDFOB) were added to a mixed solvent of diethyl carbonate (DEC) and fluoroethylene carbonate (FEC) of a volume ratio of 2:1 to prepare a liquid electrolyte.

Lithium sulfonyl(trifluoromethane sulfonyl)imide methacrylate (MTFSILi) represented by Formula 1 below as a first single-ion conducting monomer, pentaerythritol tetraacrylate (PETTA) represented by Formula 2 below as a first crosslinking monomer, and t-amyl peroxide as a thermal initiator were added to the liquid electrolyte to prepare a composition for forming a catholyte.

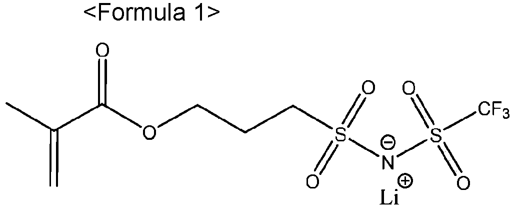

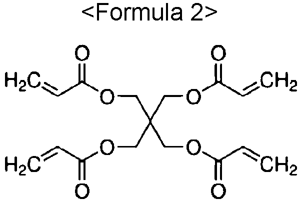

In the composition for forming a catholyte, the content of the MTFSILi was 2.8 wt%, the content of the PETTA was 2 wt% with respect to the total weight of the composition for forming a catholyte, and the content of the t-amyl peroxide was 0.02 wt% with respect to the total weight of the composition for forming a catholyte.

The prepared composition for forming a catholyte was impregnated into a porous polyethylene film, and then crosslinked in an oven at 70 °C for 1 hour and 30 minutes to prepare a catholyte.

### Comparative Preparation Example 1: MTFSILi + glycol-based crosslinker (ETPTA) + liquid electrolyte

A composition for forming a catholyte was prepared in the same manner as in Preparation Example 1, except that 3 wt% of trimethylolpropane ethoxylate triacrylate (ETPTA) represented by Formula 3 below as a glycol-based crosslinker was used as the first crosslinking monomer instead of 2 wt% of the PETTA: 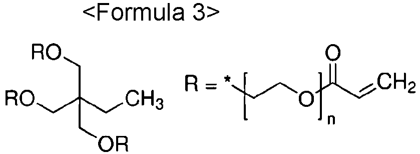 wherein, in Formula 3, n is 2 to 100.

The prepared composition for forming a catholyte was impregnated into a porous polyethylene film, and then crosslinked in an oven at 70 °C. for 1 hour and 30 minutes to prepare a catholyte.

### Comparative Preparation Example 2: Ester-based crosslinker (PETTA) + liquid electrolyte

A composition for forming a catholyte was prepared in the same manner as in Preparation Example 1, except that a first single-ion conducting monomer was not added

The prepared composition for forming a catholyte was impregnated into a porous polyethylene film, and then crosslinked in an oven at 70 °C for 1 hour and 30 minutes to prepare a catholyte.

### (Composition for forming anolyte and Anode)

### Preparation Example 2: Lithium metal anode coated with anolyte

6 parts by weight of styrene (trifluoromethane) sulfonimide lithium (STFSLi) represented by Formula 4 below as a second single ion-conducting monomer, 10 parts by weight of divinylbenzene (DVB) as a second crosslinking monomer, 25 parts by weight of lithium lanthanum zirconium oxide (LLZO, Li₇La₃Zr_{1.4}Zr_{0.6}O₁₂) as a second inorganic solid electrolyte, 5 parts by weight of reactive alumina as a second filler, 36 parts by weight of poly(ethylene oxide) (PEO) as a third polymer, 18 parts by weight of lithium bis(trifluoromethanesulfonyl)imide (LiTFSI) as a second lithium salt, and 0.1 parts by weight of an azobis-based thermal initiator (e.g., 2,2'-azobisisobutyronitrile) as a thermal initiator were added to a tetrahydrofuran (THF) solvent to prepare a composition for forming an anolyte.

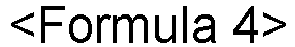

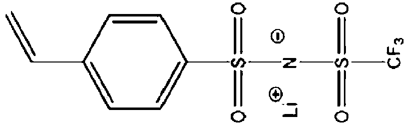

An anode in which a lithium metal film having a thickness of 20 µm is disposed on an anode current collector was prepared. Copper foil having a thickness of 9 µm was used as the anode current collector.

The composition for forming an anolyte prepared in Preparation Example 2 was applied onto the lithium metal of the anode using a doctor blade, and dried and thermally crosslinked in a vacuum oven at 70 °C for 9 hours to prepare an anode having an anode current collector/lithium metal/anolyte layer structure.

The anolyte was a gel polymer electrolyte. The thickness of the anolyte layer was about 10 µm.

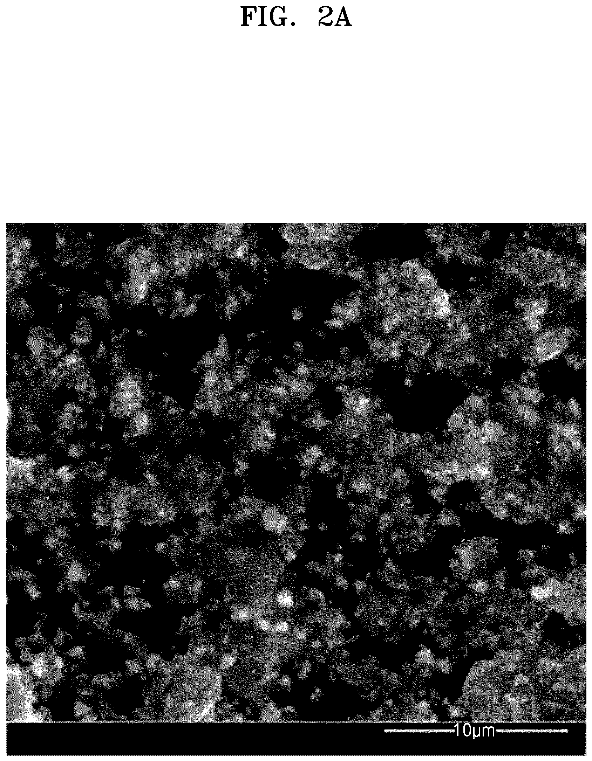

A scanning electron microscope image of the surface of the lithium metal anode coated with the anolyte prepared in Preparation Example 2 is shown in FIG. 2A. As shown in FIG. 2A, it was confirmed that the anolyte was uniformly applied on the surface of the lithium metal. It was shown that the anolyte has a composition in which inorganic solid electrolyte particles are mixed with an organic polymer.

### Comparative Preparation Example 3: Lithium metal anode

The same anode in which a lithium metal film having a thickness of 20 µm is disposed on an anode current collector used before was used.

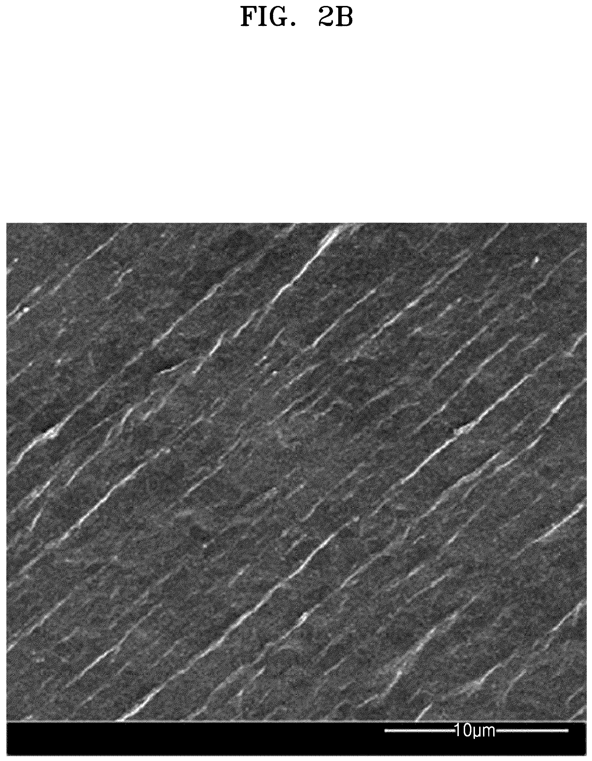

A scanning electron microscope image of the surface of the lithium metal anode prepared in Comparative Preparation Example 3 is shown in FIG. 2B. As shown in FIG. 2B, the surface of the lithium metal was flat.

### (Lithium metal battery)

### Example 1: Catholyte + Anolyte

### (Preparation of Anode)

A lithium metal anode coated with the anolyte prepared in Preparation Example 2 was prepared.

### (Preparation of Cathode)

LiCoO₂ powder and a carbon conductive material (Super-P; Timcal Ltd.)were mixed at a weight ratio of 90:5, and then a polyvinylidene fluoride (PVDF) binder solution was added to the mixture to prepare a cathode active material slurry in which a weight ratio of the active material: carbon conductive material: binder was 90:5:5.

The prepared slurry was applied onto an aluminum substrate having a thickness of 20 µm using a doctor blade, dried under reduced pressure at 120 °C, and then rolled using a roll press to prepare a cathode in the form of a sheet. The thickness of the cathode active material layer was 80 µm.

### (Manufacture of lithium metal battery)

A polyethylene separator was placed between the prepared cathode and anode to prepare a laminate. The composition for forming a catholyte prepared in Preparation Example 1 was injected into the prepared laminate, and then thermally crosslinked in an oven at 70 °C for 1 hours and 30 minutes to manufacture a lithium metal battery including a catholyte. The catholyte was a gel polymer electrolyte.

The lithium metal battery had a cathode/catholyte(separator)/anolyte/lithium metal anode structure.

### Comparative Example 1: Catholyte Only

A lithium metal battery was manufactured in the same manner as in Example 1, except that the lithium metal anode prepared in Comparative Preparation Example 1 was used instead of the lithium metal anode coated with the anolyte prepared in Preparation Example 2.

### Comparative Example 2: Anolyte Only

A lithium metal battery was manufactured in the same manner as in Example 1, except that a liquid electrolyte was injected instead of the composition for forming a catholyte prepared in Preparation Example 1 and a thermal crosslinking process was omitted.

A liquid electrolyte, in which 0.6 M LiBF₄ and 0.6 M LiDFOB were added to a mixed solvent of DEC and fluoroethylene FEC of a volume ratio of 2:1, was used.

### Evaluation Example 1: Evaluation of electrochemical stability of catholyte

The catholytes prepared in Preparation Example 1 and Comparative Preparation Example 1 were prepared, respectively.

The lithium metal anode was used as a reference electrode, and the prepared catholyte was placed between a reference electrode and a working electrode, and an electrolyte was injected to prepare a test cell. An SUS current collector was used as the working electrode.

The current density of lithium metal to voltage was measured up to 6.0 V at a sweep rate of 1 mV/s using linear sweep voltammetry, and the measurement results thereof are shown in FIG. 3.

As shown in FIG. 3, the catholyte of Preparation Example 1 had a current density of 0.003 mA/cm² or less due to a side reaction such as oxidation up to 5.0 V compared to the lithium metal, which was very low. In contrast, the catholyte of Comparative Preparation Example 1 had a current density of 0.005 mA/cm² or more.

Therefore, it was confirmed that the catholyte of Preparation Example 1 had improved electrochemical stability up to a high voltage of 5.5 V compared to the catholyte of Comparative Preparation Example 1.

### Evaluation Example 2: Measurement of ion conductivity of catholyte

For the catholytes prepared in Preparation Example 1 and Comparative Preparation Example 2, ion conductivity (σ) and lithium ion transference number (t+) were measured at 25°C using a lithium symmetric cell and an impedance analyzer (Solartron 1260A Impedance/Gain-Phase Analyzer coupled with Solartron 1287 Electrochemical Interface). Ion conductivity and lithium ion transference number were deduced using an AC impedance method combined with a steady-state current method. First, initial lithium interfacial resistance (Ro) was measured from the impedance spectrum in the frequency range of 0.1 Hz to 100 kHz, subsequently, a small DC voltage (<30 mV) was applied until a steady-state current (Iss) was obtained (time = 3000 s), and finally steady-state lithium interfacial resistance (Rss) was measured from the impedance spectrum in the frequency range of 0.1 Hz to 100 kHz. The lithium ion transference number (t+) and lithium ion conductivity (σ(Li+)) were deduced using the parameters obtained from the impedance response and steady-state current response.

The lithium symmetric cell has a Li/anode electrolyte/Li structure by placing a catholyte film between lithium electrodes, and this structure was sealed within the cell. The measurement results thereof are shown in Table 1 below.

**[Table 1]**

| | Ion conductivity [S/cm] | Lithium ion transference number | Lithium ion conductivity [S/cm] |
|---|---|---|---|
| Preparation Example 1 | 2.5×10⁻⁴ | 0.35 | 8.8×10⁻⁵ |
| Comparative Preparation Example 2 | 1.8×10⁻⁴ | 0.28 | 5.1×10⁻⁵ |

As shown in Table 1, the catholyte of Example 1 had improved ion conductivity, lithium ion transfer number, and lithium ion conductivity compared to the catholyte of Comparative Example 2.

In the catholyte of Preparation Example 1, only lithium ions move because anions are fixed to a backbone derived from a single ion-conducting monomer. Therefore, the ion conductivity, lithium ion transference number, and lithium ion conductivity of the catholyte of Preparation Example 1 increased, respectively, compared to the catholyte of Comparative Preparation Example 1.

### Evaluation Example 3: Charge-discharge test of lithium battery including catholyte

A cathode was prepared in the same manner as in Example 1. The lithium metal anode prepared in Comparative Preparation Example 3 was prepared as an anode. A polyethylene separator was placed between the prepared cathode and anode to prepare a laminate.

The composition for forming a catholyte prepared in Preparation Example 1 was injected into the laminate, and then thermally crosslinked in an oven at 70 °C for 1 hours and 30 minutes to manufacture a lithium metal battery including a catholyte.

Then, the composition for forming a catholyte prepared in Comparative Preparation Example 1 was injected into the laminate, and then thermally crosslinked in an oven at 70 °C for 1 hour and 30 minutes to separately manufacture a lithium metal battery including the catholyte of Comparative Preparation Example 1.

A lithium battery including the catholyte of Preparation Example 1 and a lithium battery including the catholyte of Comparative Preparation Example 1 were charged at a constant current of 0.2 C rate at 25 °C until a voltage reached 4.48 V (vs. Li). Subsequently, the lithium metal batteries were discharged at a constant current of 0.5 C rate until the voltage reached 3.0 V (vs. Li) during discharge. This charge-discharge cycle was repeated 100 times.

In every charge-discharge cycle, a pause of 5 minutes was allowed after each charge/discharge cycle. The results of charge/discharge experiment at room temperature are shown in Table 2 below. A capacity retention rate is defined by Equation 1 below. Capacity retention rate [%] = [Discharge capacity at 100th cycle / Discharge capacity at 1st cycle] X 100

**[Table 2]**

| | Initial discharge capacity [mAh/g] | Capacity retention rate [%] |
|---|---|---|
| Preparation Example 1 | 181.9 | 88.2 |
| Comparative Preparation Example 1 | 174.2 | 72.3 |

As shown in Table 2, the lithium battery including the catholyte of Preparation Example 1 exhibited significantly improved initial discharge capacity and lifespan characteristics compared to the lithium battery including the catholyte of Comparative Preparation Example 1.

It was determined that these results were because the electrochemical stability of the catholyte of Preparation Example 1 was improved compared to that of the catholyte of Comparative Preparation Example 1, and thus a side reaction such as decomposition due to oxidation of an electrolyte during charge and discharge were suppressed.

### Evaluation Example 4: Confirmation of the cross-sectional structure of lithium battery including anolyte

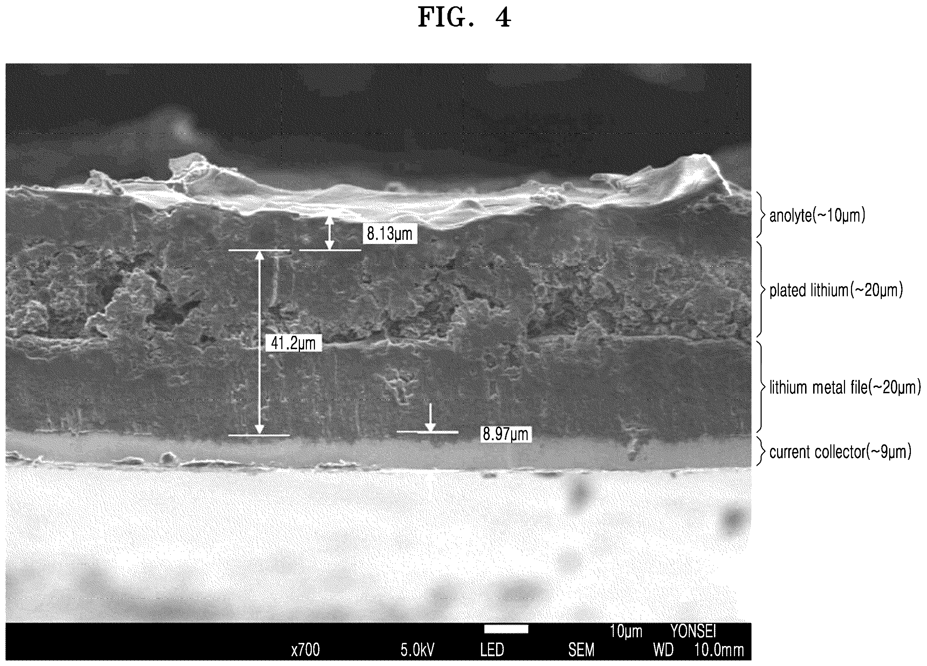

A cathode was prepared in the same manner as in Example 1. An anode coated with an anolyte layer was prepared in the same manner as in Preparation Example 2. A polyethylene separator was placed between the prepared cathode and anode to prepare a laminate. The composition for forming a catholyte prepared in Preparation Example 1 was injected into the laminate and the laminate was sealed, and then the composition was thermally crosslinked in an oven at 70 °C for 1 hours and 30 minutes to manufacture a lithium metal battery including the catholyte and anolyte of Example 1. The lithium battery including the catholyte and anolyte of Example 1 was charged at a constant current at 25 °C and then disassembled. A scanning electron microscope image of the cross-section of the anode was measured, and the results thereof are shown in FIG. 4.

As shown in FIG. 4, it was confirmed that a lithium metal layer having a thickness of about 20 µm was additionally placed between the anolyte layer and the lithium metal anode.

Therefore, it was confirmed that the anolyte layer suppresses a side reaction between the liquid electrolyte and the lithium metal by blocking direct contact between the liquid electrolyte and the lithium metal layer.

### Evaluation Example 5: Room Temperature Charge-Discharge Test

The lithium batteries manufactured in Example 1 and Comparative Examples 1 and 2 were charged at a constant current of 0.2 C rate at 25 °C until a voltage reached 4.48 V (vs. Li). Subsequently, the lithium batteries were discharged at a constant current of 0.5 C rate until the voltage reached 3.0 V (vs. Li) during discharge.

This cycle was repeated 500 times under the same conditions. In every charge-discharge cycle, a pause of 5 minutes was allowed after each charge/discharge cycle.

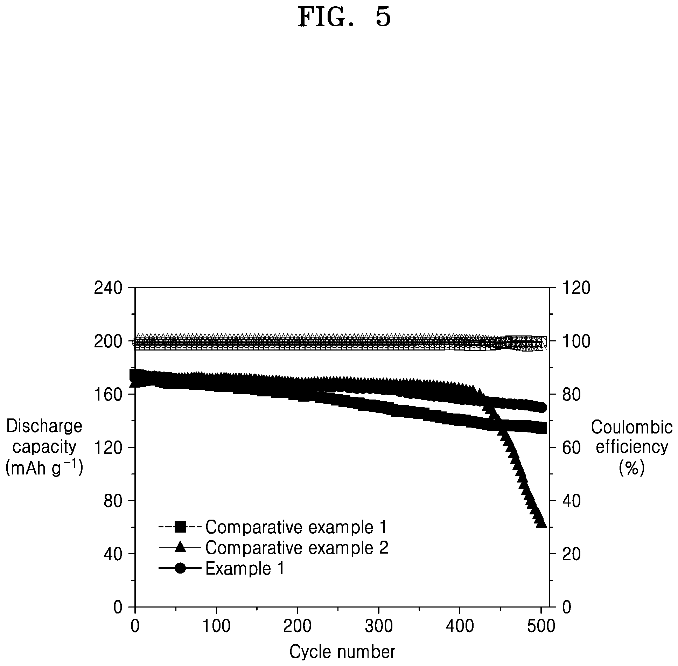

Some of the results of the room temperature charge-discharge experiment are shown in Table 3 and FIG. 5 below. A capacity retention rate is defined by Equation 2 below. Capacity retention rate [%] = [Discharge capacity at 500th cycle / Discharge capacity at 1st cycle] X 100

**[Table 3]**

| | Electrolyte | Capacity retention rate [%] |
|---|---|---|
| Example 1 | Catholyte/anolyte | 87 |
| Comparative Example 1 | Catholyte only | 77 |
| Comparative Example 2 | Anolyte only | 37 |

As shown in FIG. 5 and Table 3, the lithium metal battery of Example 1 had an improved capacity retention rate compared to the lithium metal batteries of Comparative Examples 1 and 2.

It was determined that the lithium metal battery of Example 1 suppressed side reactions and improved reversibility of electrode reactions by simultaneously including a catholyte having excellent high-voltage stability and lithium ion conductivity and an anolyte suppressing the formation of lithium dendrites.

Although example embodiments have been described in detail with reference to the attached drawings, the present inventive concept is not limited to these example embodiments. It is obvious that a person with ordinary knowledge in the technical field to which the present inventive concept belongs can derive various examples of changes or modifications within the scope of the technical idea described in the claims, and these examples also naturally fall within the technical scope of the present inventive concept.

### [Explanation of Reference Numerals]

| | | | |
|---|---|---|---|
| 1 | lithium battery | 2, 20 | anode |
| 3, 10 | cathode | 4 | separator |
| 5 | battery case | 6 cap | assembly |
| 7 | battery structure | 8 | electrode tap |
| 11 | cathode current collector | 12 | cathode active material layer |
| 21 | anode current collector | 22 | anode active material layer |
| 30 | electrolyte | 30a | catholyte |
| 30b | anolyte | | |

### Industrial Applicability

According to a lithium metal battery including an electrolyte having a new structure, it is possible to provide a lithium metal battery in which deterioration of a catholyte is prevented, side reactions of a lithium metal anode are prevented, and cycle characteristics are improved.

## Claims

1. A lithium metal battery comprising: a cathode; an anode; and an electrolyte disposed between the cathode and the anode,
wherein the anode includes a lithium metal,
the electrolyte includes: a catholyte disposed adjacent to the cathode; and an anolyte disposed between the catholyte and the anode,
the catholyte includes a first polymer electrolyte, the first polymer electrolyte includes a first polymer, and
the first polymer includes: a first repeating unit derived from a first single-ion conducting monomer; and a second repeating unit derived from a first crosslinking monomer having a plurality of reactive functional groups.

2. The lithium metal battery of claim 1, wherein the first single-ion conducting monomer includes a reactive functional group, an anionic functional group, and a counter cation,
the reactive functional group includes a vinyl group, an acrylic group, a methacrylic group, a (4-vinyl)phenyl group, or a combination thereof,
the anionic functional group includes a carboxyl group, a sulfonate group, a sulfonylimide group, or a combination thereof, and
the counter cation is an alkali metal cation.

3. The lithium metal battery of claim 1, wherein the first crosslinking monomer includes three or more reactive functional groups.

4. The lithium metal battery of claim 1, wherein the first crosslinking monomer is a monomer free of an alkylene oxide repeating unit, and
the first crosslinking monomer includes polycaprolactone diacrylate, polycaprolactone dimethacrylate, pentaerythritol tetraacrylate, pentaerythritol tetramethacrylate, trimethylolpropane triacrylate, trimethylolpropane trimethacrylate, or a combination thereof.

5. The lithium metal battery of claim 1, wherein a content of the first polymer is 0.2 to 10 wt% with respect to a total weight of the first polymer electrolyte.

6. The lithium metal battery of claim 1, wherein the first polymer electrolyte further includes at least one selected from a first inorganic solid electrolyte, a first filler, a first organic solvent, and a first lithium salt.

7. The lithium metal battery of claim 1, wherein the first organic solvent includes a carbonate-based organic solvent, and
the carbonate-based organic solvent includes ethylene carbonate, propylene carbonate, fluoroethylene carbonate, dimethyl carbonate, diethyl carbonate, ethyl methyl carbonate, or a combination thereof.

8. The lithium metal battery of claim 1, wherein the first lithium salt includes LiBF₄, LiPF₆, LiCIO₄, LiCF₃SO₃, LiN(CF₃SO₂)₂, LiN(C₂F₅SO₂)₂, LiC(CF₂SO₂)₃, LiBF₂(C₂O₄), or a combination thereof.

9. The lithium metal battery of claim 1, wherein the catholyte is free of a compound including an alkylene oxide repeating unit,
the compound including the alkylene oxide repeating unit is a monomer, an oligomer polymer, or a combination thereof, and
the alkylene oxide group is an ethylene oxide group.

10. The lithium metal battery of claim 1, wherein a current density measured at 5.0 V versus lithium metal by linear sweep voltammetry (LSV) performed at a sweep rate of 1 mV/s for the catholyte is 0.003 mA/cm² or less.

11. The lithium metal battery of claim 1, wherein a lithium ion transference number of the catholyte is 0.3 or more.

12. The lithium metal battery of claim 1, further comprising a porous support disposed between the cathode and the anode,
wherein the catholyte is impregnated into the porous support.

13. The lithium metal battery of claim 1, wherein the anolyte includes a second polymer electrolyte, the second polymer electrolyte includes a second polymer, and
the second polymer includes: a third repeating unit derived from a second single-ion conducting monomer; and a fourth repeating unit derived from a second crosslinking monomer having a plurality of reactive functional groups.

14. The lithium metal battery of claim 13, wherein the second crosslinking monomer includes an aromatic ring, and
a content of the second crosslinking monomer is 2 to 10 wt% with respect to a total weight of the second polymer electrolyte.

15. The lithium metal battery of claim 13, wherein the second polymer electrolyte further includes at least one selected from a second inorganic solid electrolyte, a second filler, a second lithium salt, and a third polymer,
the second inorganic solid electrolyte includes an oxide-based solid electrolyte, a particle diameter of the oxide-based solid electrolyte is 400 to 800 nm, and a content of the second inorganic solid electrolyte is 5 to 60 wt% with respect to a total weight of the second polymer electrolyte, and
the second filler includes inorganic particles, the inorganic particles include a metal oxide, a particle diameter of the metal oxide is 20 to 400 nm, and a content of the second filler is 5 to 15 wt% with respect to a total weight of the second polymer electrolyte.

16. The lithium metal battery of claim 15, wherein the second polymer electrolyte includes the second filler and the second polymer, and
the second filler is chemically bonded to the second polymer through a reactive functional group disposed on a surface of the second filler.

17. The lithium metal battery of claim 15, wherein the third polymer is an ion conducting polymer, and the third polymer includes an alkylene oxide repeating unit.

18. The lithium metal battery of claim 1, wherein each of the catholyte and the anolyte is a polymer gel electrolyte, and
an elastic modulus of the anolyte is greater than an elastic modulus of the catholyte.

19. The lithium metal battery of claim 1, wherein a thickness of the catholyte is greater than a thickness of the anolyte,
a thickness of the lithium metal is greater than a thickness of the anolyte,
a thickness of the catholyte is 8 to 25 µm,
a thickness of the lithium metal is 10 to 200 µm, and
a thickness of the anolyte is 1 to 20 µm.

20. A method for manufacturing a lithium metal battery, the method comprising: preparing a composition for forming a catholyte;
preparing a composition for forming an anolyte;
applying the composition for forming an anolyte onto a lithium metal anode;
crosslinking the applied composition for forming an anolyte to prepare the lithium metal anode coated with an anolyte;
stacking the lithium metal anode coated with the anolyte, a porous film, and a cathode to prepare an assembly;
injecting the composition for forming a catholyte into the assembly; and
crosslinking the injected composition for forming a catholyte to prepare a lithium metal battery including a catholyte,
wherein the lithium metal battery includes: a cathode; an anode; and an electrolyte disposed between the cathode and the anode,
the catholyte includes a first polymer electrolyte, and the first polymer electrolyte includes a first polymer, and
the first polymer includes: a first repeating unit derived from a first single-ion conducting monomer; and a second repeating unit derived from a first crosslinking monomer having a plurality of reactive functional groups.
